# EUROPEAN PATENT SPECIFICATION

(11) **EP 4 295 661 B1**
(45) Date of publication and mention of the grant of the patent: **12.08.2026**
(21) Application number: 23156164.8
(22) Date of filing: 10.02.2023
(51) Int. Cl.: A01D 41/14, A01D 63/02, A01D 63/04

(54) **CONTROLLABLE END DIVIDERS**
STEUERBARE ENDTEILER
DIVISEURS D'EXTRÉMITÉ POUVANT ÊTRE COMMANDÉS

(30) Priority: 28.02.2022 US 202217682483
(43) Date of publication of application: 27.12.2023
(73) Proprietor: Deere & Company, Moline, IL 61265 (US)
(72) Inventor: Vandike, Nathan R., Mannheim (DE); Bomleny, Duane M., Mannheim (DE)
(74) Representative: Holst, Sönke

(56) References cited:
- US-A1- 2016 324 072
- US-A1- 2020 060 088
- US-B2- 10 462 969
- US-B2- 10 694 654
- US-B2- 11 051 452
- US-B2- 9 265 198

## Description

### FIELD OF THE DESCRIPTION

The present description relates to controlling agricultural harvesters. More specifically, the present description relates to controlling end dividers on a head of an agricultural harvester (see US 2016/324072 A1).

### BACKGROUND

There are several different types of agricultural harvesters. One type of agricultural harvester is a combine harvester which can have different heads attached to harvest different types of crops.

In one example, a corn head can be attached to the combine harvester in order to harvest corn. A corn head may have row dividers and gathering chains. The row dividers help to divide the rows of corn and the gathering chains pull the corn stalks into a set of snap rolls that separate the ears of the corn plant from the stalks. The ears are then moved by an auger toward the center of the corn head where the ears enter the feeder house of the combine harvester. The ears are then further processed within the combine harvester to remove the kernels of corn from the cobs.

During a harvesting operation, after the ears of corn are separated from the stalk, the ears can bounce around on the head and can bounce off of the head onto the field and be lost. In order to address this type of loss, some corn heads have end dividers on the ends of the corn head. The end dividers can be raised manually to inhibit ear loss over the sides of the corn head. The end dividers can also be lowered manually. Such a header is described in US 10 462 969 B2.

EP 3 603 379 A1, considered as generic, describes a harvesting machine with a crop harvesting header having end dividers in the form of vertical side knifes or augers or snouts moved around the vertical axis dependent on the steering angle. The end dividers that are automatically switched on when they are on the side of the header engaging into harvested crop, while the end dividers on the other side are then automatically deactivated.

### SUMMARY

The present invention is defined by the claims.

### BRIEF DESCRIPTION OF THE DRAWINGS

FIG. 1 is a pictorial illustration of an example combine harvester with a rigid corn head attached.
FIG. 2 is a pictorial illustration of an example combine harvester with a foldable corn head attached.
FIG. 3A is a perspective view of an example corn head and a block diagram of a portion of an example agricultural system.
FIG. 3B is a perspective view showing an example agricultural system.
FIGS. 4A-B are block diagrams showing example agricultural systems.
FIG. 5 is a block diagram showing one example of an actuator controller.
FIG. 6 is a flow diagram illustrating an example operation of an agricultural system in controlling end dividers.
FIGS. 7, 8, 9, 10, 11, 12, 13, 14, 15, 16, 17, 18, 19, 20, 21, 22, and 23 are flow diagrams showing different examples of automatic control of end dividers.
FIG. 24 is a block diagram showing one example of an agricultural system in a remote server environment.
FIGS. 25-27 show examples of mobile devices.
FIG. 28 is a block diagram showing one example of a computing environment.

### DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates.

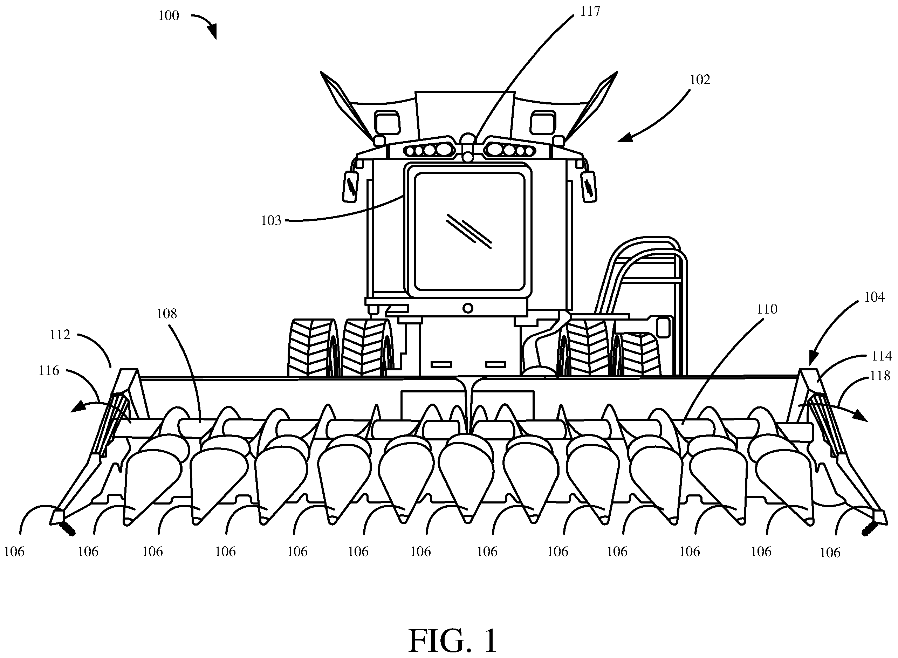

FIG. 1 is a pictorial illustration of one example of an agricultural harvester 100. Agricultural harvester 100 includes combine harvester 102 and head 104. Combine harvester 102 includes an operator's compartment 103 that has operator interface mechanisms that can be used by an operator to control combine harvester 102 and head 104. Some examples of operator interface mechanisms are described below.

As shown, head 104 is a rigid head, meaning that head 104 is not foldable. Head 104 has a plurality of row dividers 106 and augers 108 and 110. Row dividers 106 separate the corn rows as agricultural harvester 100 moves through a field. The stalks are guided between row dividers 106 where gathering chains move the stalks into a set of snap rolls that remove the ears from the stalks. The ears are then moved toward a central portion of head 104 by augers 108 and 110, where the ears enter a feeder house, which feeds the ears into the combine harvester 102 for further processing.

As discussed above, after the ears are separated from the stalks, the ears can bounce around on head 104 and bounce over the end 112 of head 104 in the direction indicated by arrow 116. The ears can also bounce over end 114 of head 104 in the direction indicated by arrow 118. If the ears bounce over either end 112 or end 114, the ears fall to the ground and are lost.

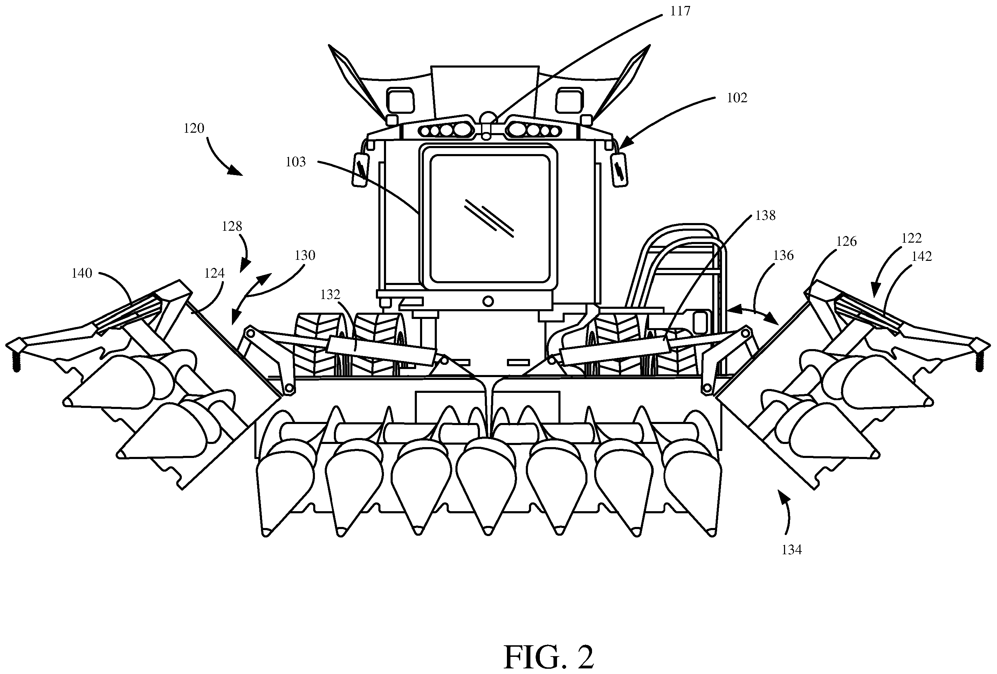

FIG. 2 is a pictorial illustration of another example of an agricultural harvester 120. Agricultural harvester 120 includes combine harvester 102 attached to a head 122. In the example shown in FIG. 2, head 122 is a foldable corn head. Therefore, the head 122 includes opposite end sections 124 and 126 which can be moved between a deployed position and a folded position. In one example, end portion 124 is foldable about a pivot 128. End portion 124 folds about pivot 128 in the direction indicated by arrow 130. The movement of end portion 124 is driven by an actuator 132 which, in the example shown in FIG. 2, is illustrated as a hydraulic actuator. End portion 126 can be moved between a deployed position and a folded position. Similarly, end portion 126 can rotate about pivot 134 generally in the direction indicated by arrow 136. The movement of end portion 126 can be driven by actuator 138. In the example shown in FIG. 2, actuator 138 is a hydraulic actuator.

Head 122 has opposite ends 140 and 142. Once ears of corn are separated from the stalks by the head 122 shown in FIG. 2, the ears can bounce around on head 122 and bounce over the ends 140 or 142 and thus be lost.

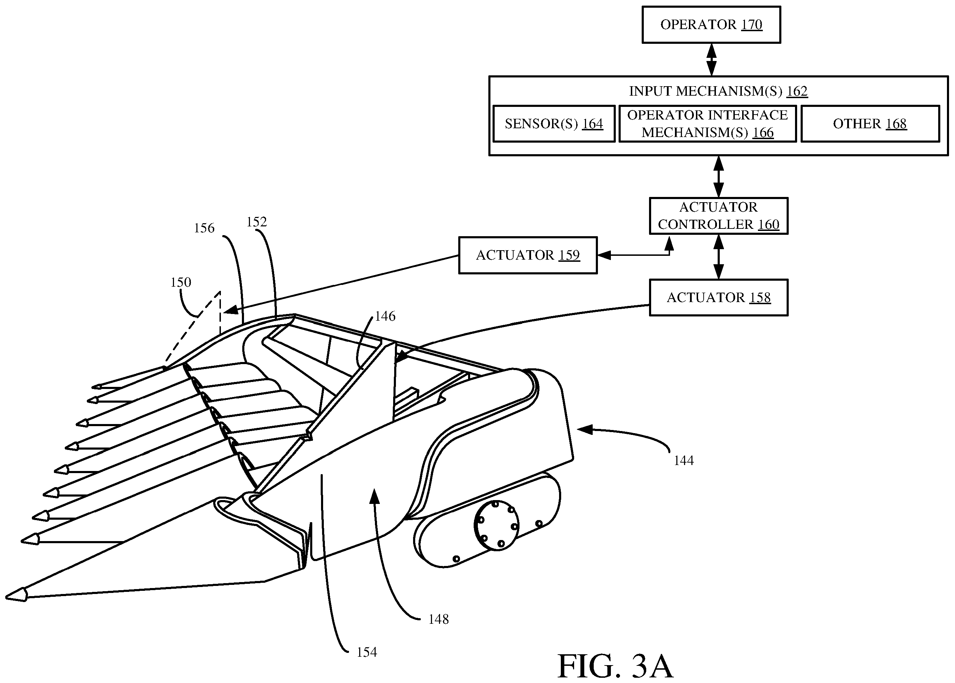

FIG. 3A shows another view of a head 144. In order to address the problem of ears of corn being lost over the ends of head 144, head 144 is fitted with a first end divider 146 disposed at a first end 148 of head 144. Head 144 also has a second end divider 150 (shown in phantom in FIG. 3A) disposed at a second end 152 of head 144. Head 144 can be used with agricultural 100 or agricultural harvester 120, and thus head may be a rigid head or a foldable head. End dividers 146 and 150 are movable between a retracted position, and a raised position. In the example shown in FIG. 3A, end divider 146 is shown in the raised position and end divider 150 is shown in phantom in the raised position. When end divider 146 is in the retracted position, end divider 146 is retracted within a housing 154. When end divider 150 is in the retracted position, end divider 150 is retracted within a housing 156.

In some current systems, end dividers 146 and 150 are manually movable between the raised position and the retracted position. Therefore, in order to change the position of an end divider 146 or 150, the operator of the agricultural harvester 100 or 120 must exit the operator compartment 103 in order to effectuate a positional change of the end dividers 146 and 150. For instance, if the operator wishes to lower end divider 146 to the retracted position, the operator must exit the operator compartment 103 and manually lower end divider 146 into its retracted position. Similarly, if the operator then wishes to raise end divider 146, the operator, in current systems, must exit operator compartment 103 and manually raise end divider 146. Similarly, in current systems, the end dividers 146 and 150 are only positionable between the fully retracted position in which the end divider is fully retracted, and the fully raised position in which the end divider is fully raised.

The present description thus proceeds with respect to a system in which the end dividers 146 and 150 are automatically movable between the fully retracted position and the fully raised position. In some examples, positions of the end dividers 146 and 150 are selectable to any of a plurality of different positions between the fully retracted position and the fully raised position. Also, in some examples, the end dividers 146 and 150 are movable to a position based upon an operator input, such as an operator input made from within the operator compartment 103 of the combine harvester 102. Also, in some examples, the position of the end dividers 146 and 150 is automatically controlled based upon sensor inputs, operator inputs, or other inputs.

Referring again to FIG. 3A, end divider 146 is moveable between the retracted position and the raised position by an actuator 158. End divider 150 is moveable between the retracted position and the raised position by an actuator 159. Example actuators within the scope of actuators 158 and 159 include a linear actuator, a rotary actuator, a hydraulic actuator, an electric actuator, or a pneumatic actuator. In other implementations, the actuator 158 or 159 may be another type of actuator.

An actuator controller 160 generates control signals to control actuator 158 and actuator 159 based upon inputs from one or more input mechanisms 162. Input mechanisms 162 may include one or more sensors 164, one or more operator interface mechanisms 166, and one or more other input mechanisms 168. The operator interface mechanism 166 may be one or more of pedals, levers, joysticks, a steering wheel, buttons, switches, keypads, keyboards, a point and click device, a touch sensitive display device, an actuator displayed on a user interface, a speaker, speech synthesis and speech recognition functionality, and other audible, visible and haptic operator input and output devices. An operator 170 may therefore provide an input through operator interface mechanisms 166 to command end divider 146, or end divider 150, or both end dividers 146 and 150, to move to a desired position. The operator input mechanisms 166 may detect the command from operator 170 and provide an indication of the command to actuator controller 160. Actuator controller 160 generates control signals to control actuator 158 to control the position of end divider 146 in response to the provided command indication. Similarly, actuator 160 generates control signals to control actuator 159 to control the position of end divider 150 based on the command from operator 170. In some examples, actuator controller 160 generates separate control signals for each of the actuators 158 and 159. Consequently, in some instances, actuator 158 and actuator 159 are independently controllable relative to one another. Therefore, in some implementations, the position of end divider 146 is independently controllable relative to the position of end divider 150.

Also, in some examples, sensors 164 include a plurality of different sensors that generate sensor signals. The sensor signals are used by actuator controller 160 to automatically generate control signals to control actuator 158 and actuator 159 to thereby control the position of end divider 146 and end divider 150 based upon the sensor signals. Some examples of different types of sensor signals that are within the scope of signals generated by sensors 164 and used by actuator controller 160 to generate control signals to control actuator 158 and actuator 159 are discussed in greater detail below. In one example, sensors 164 can include observation sensor system 117.

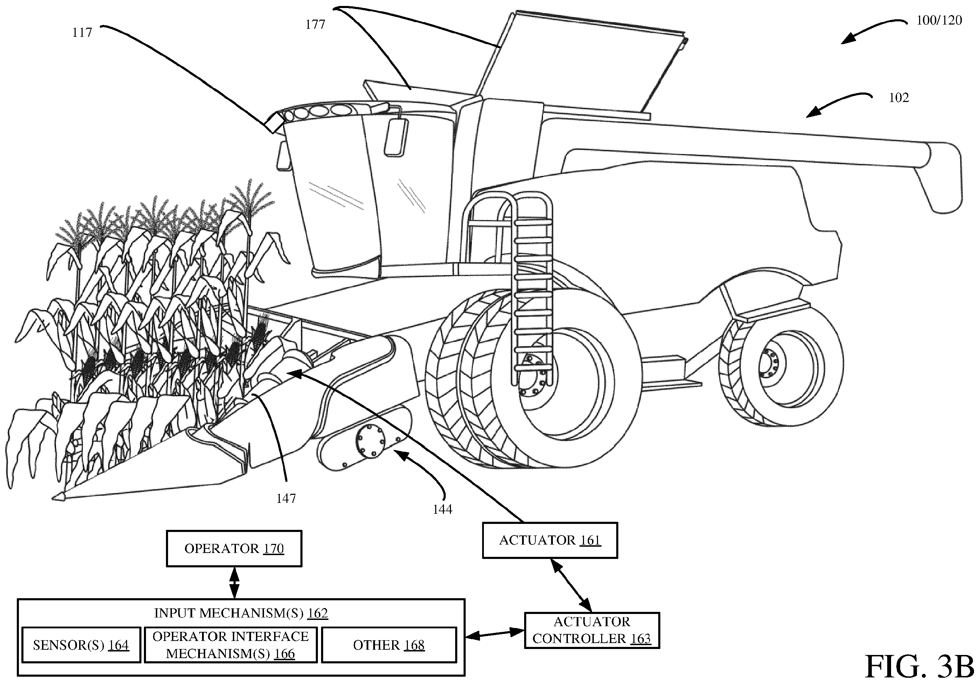

FIG. 3B shows a view of another example head 144. In this example, head 144 includes end dividers 147 (e.g., one on each end of head 144, though only one end divider 147 is shown in FIG. 3B). End dividers 147 are active end divider. This type of end divider 147 is rotationally driven by an actuator 161 that is controlled by an actuator controller 163. The rotational speed and direction of end divider 147 can be controlled via actuator controller 163. While only one end divider 147 is shown, there may be one or more active end dividers on both sides of head 144.

In some examples, the rotation speed and direction of the end dividers 147 are automatically controlled based upon sensor inputs, operator inputs, or other inputs. For instance, sensors 164 can include a plurality of different sensors that generate sensor signals. The sensor signals are used by actuator controller 163 to automatically generate control signals to control actuator 161 to thereby control the speed and direction of rotation of end divider 147 based upon the sensor signals. Some examples of different types of sensor signals that are within the scope of signals generated by sensors 164 and used by actuator controller 163 to generate control signals to control actuator 161 are discussed in greater detail below. While some examples are discussed in the context of actuator 158 and end dividers 146 and 150, it is expressly contemplated that these examples are also applicable to actuator 161 and end divider 147.

FIG. 3B also illustrates that agricultural harvester 100, 120 can include actuatable grain tank covers 177 which can be driven between an open position (as shown in FIG. 3B) and a closed position. In some examples, the grain tank covers are open when the agricultural harvester is in a field mode and are closed when the agricultural harvester is in a road mode.

Also, as illustrated in FIGS. 1-2 and 3B, an agricultural harvester (e.g., 100 or 120) can include an observation sensor system 117. Observation sensor system 117 can include one or more sensors, such as one or more image capture devices (e.g., mono or stereo cameras), one or more optical sensors, one or more lidar sensors, one or more radar sensors, one or more ultrasonic sensors, one or more infrared sensors, one or more thermal imagers, and one or more of a variety of other sensors. Observation sensor system 117 can detect one or more characteristics, such as one or more of ear loss, hair pinning, wrapping, crop state, material flow, ear orientation, weeds, header movement, terrain characteristics, adjacent crop row characteristics, as well as a variety of other characteristics. Observation sensor system 117 can detect or have a field of view that includes head 104 as well as areas of the field surrounding the head of the agricultural harvester 100, 120 (e.g., head 104, head 122, or head 144) and/or surrounding agricultural harvester 100, 120. While shown at a particular location in FIGS. 1-2 and 3B, it will be understood that in other example, observation sensor system 117 can be placed a variety of locations on agricultural harvester 100, 120. Additionally, the agricultural harvester 100, 120 can include a plurality of observation sensor systems 117 each disposed at a different location on agricultural harvester 100, 120. Additionally, it will be understood that a plurality of different characteristics can be detected by the same type of sensor, for instance, an image captured by an image capture device may be used to detect a plurality of different characteristics.

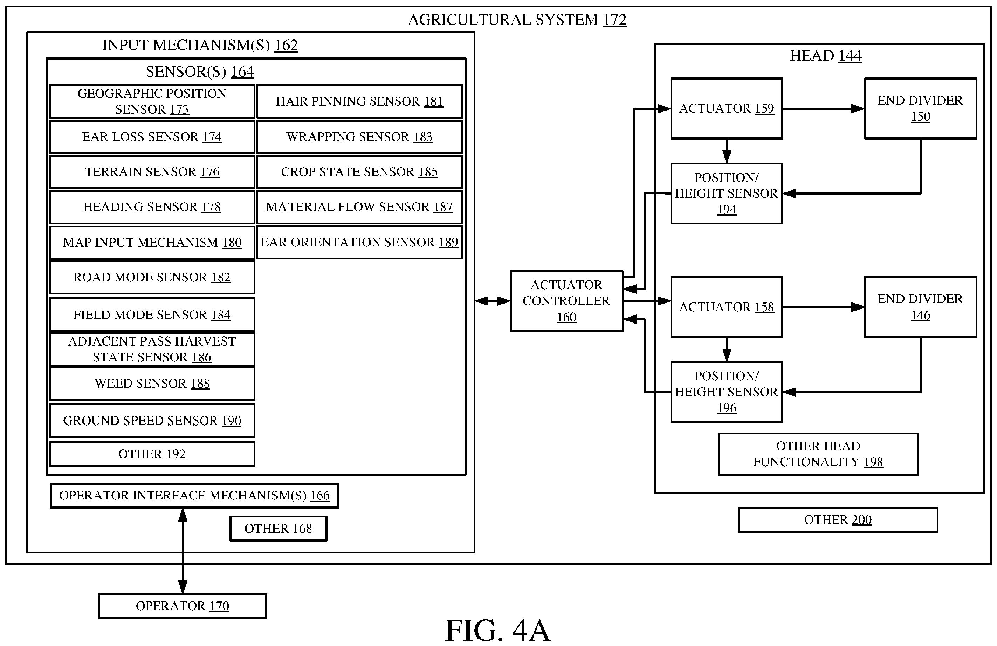

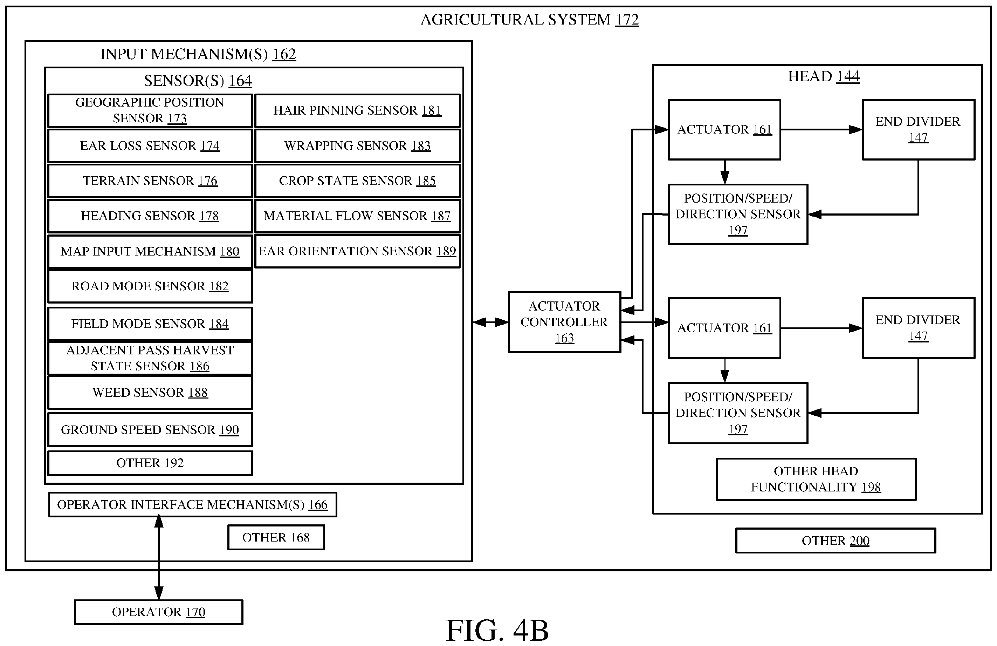

FIGS. 4A-B (collectively referred to as FIG. 4) are block diagrams of example agricultural systems 172. FIG. 4A shows an example agricultural system 172 having end dividers 146 and 150. FIG. 4B shows an example agricultural system having end dividers 147. Some of the items in agricultural system 172 are similar to those shown in FIG. 3 and are similarly numbered in FIG. 4. It will be noted that different input mechanisms 162 may be located in different places on agricultural harvester 100, 120. For instance, in some implementations, some of the input mechanisms 162 are located on the head while others are located in the operator compartment. In some instances, other input mechanisms 162 are located on combine harvester 102, but external to the operator compartment 103. In some implementation, the functionality of actuator controller 160 or actuator controller 163 is located on the head used by agricultural harvester 100, 120 or on the combine harvester 102 or elsewhere. In still other implementations, the functionality of actuator controller 160 or actuator controller 163 is divided between combine harvester 102 and the head used by the agricultural harvester 100, 120.

In other examples, the operator 170 may be a remote operator 170, and thus some of the input mechanisms 162 (e.g., operator interface mechanisms 166) are located remotely from agricultural harvester 100, 120. Alternatively, even where an operator 170 is remote, some input mechanisms 162 (e.g., operator interface mechanisms 166) may remain local to the agricultural harvester 100, 120 and a remote operator interface may include its own respective operator interface mechanisms that provide similar functionality as operator interface mechanisms 166. The inputs into the remote operator interface mechanisms can be communicated to agricultural system 172 over a communication network. In yet other examples, the operator 170 may be an automated system. The automated system operator may be onboard or remote from agricultural harvester 100, 120. The automated system operator may provide inputs through input mechanisms 162 for the control of agricultural harvester 100, 120, such as control inputs to provide operating settings.

In FIG. 4A, sensors 164 include geographic position sensor 173, ear loss sensor 174, terrain sensor 176, heading sensor 178, map input mechanism 180, road mode sensor 182, field mode sensor 184, adjacent pass harvest state sensor 186, weed sensor 188, ground speed sensor 190, hair pinning sensor 181, wrapping sensor 183, crop state sensor 185, material flow sensor 187, ear orientation sensor 189, and other items 192. FIG. 4A also shows that the example head 144 includes position/height sensor 194 and position/height sensor 196 as well as other head functionality 198. Position/height sensor 194 senses the position or height of end divider 150 relative to its fully retracted position or relative to its fully raised position. Therefore, position/height sensor 194 is a senor that senses the position of end divider 150, itself, or that senses the position of actuator 159. By way of example, if actuator 159 is a linear actuator such as a hydraulic cylinder, then position/height sensor 194 may be a Hall Effect sensor or another type of sensor that can sense the position of actuator 159 so that the position of end divider 150 can be determined based upon the position of actuator 159. In another example, assume that end divider 150 moves between its retracted position and its raised position by rotating about a pivot point. In that case, position/height sensor 194 may be a rotary sensor that senses an amount by which end divider 150 is rotated about the pivot point so that the position of end divider 150 relative to the retracted position of end divider 150 or relative to the raised position of end divider 150 is determinable. Position/height sensor 196 may operate in the same way as position/height sensor 194 or in a different way.

FIG. 4B also shows that the example head 144 includes speed/direction sensors 197 as well as other head functionality 198. Speed/direction sensors 197 senses the speed and direction of rotation of end divider 147. Therefore, speed/direction sensors 197 includes a senor that senses the speed and/or rotation of end divider 147, itself, or that senses the speed and/or direction of actuator 161. By way of example, if actuator 161 is a rotation actuator such as a hydraulic motor, then speed/direction sensors 197 may be a hydraulic flow sensor or another type of sensor that can sense the position of actuator 161 so that the direction and speed of end divider 147 can be determined based upon the direction and speed of actuator 161. In another example, assume end divider 147 rotates about a pivot point. In that case, speed/direction sensors 197 can include a rotary sensor that senses an amount by which end divider 147 is rotated about the pivot point so that the position/speed/direction of end divider 147 is determinable. Multiple speed/direction sensors 197 may include different sensors or operate in a different ways.

Also, it will be noted that, while head 144 is shown as a rigid head, head 144 could be a foldable head such as head 122 shown in FIG. 2. When the head 144 is a foldable head, then the other head functionality 198 includes actuators 132 and 138. FIG. 4 shows that agricultural system 172 may also include other items 200.

Some of the sensors 164 will now be described by way of example only. Geographic position sensor 173 senses a position of agricultural harvester 100, 120. Geographic position sensor 173 may be a global navigation satellite system (GNSS) receiver, a cellular triangulation sensor, or another type of sensor that senses the position of agricultural harvester 100, 120 in a global or local coordinate system.

Ear loss sensor 174 illustratively detects ear loss over the sides 148 and 152 of head 144, as well as ear loss from contact between the header 104 or component of head 104 (e.g., an end divider 146 and/or 150 or 147) and crop in an adjacent crop row. Ear loss sensor 174 includes optical sensors, such as an image capture device (e.g., a camera) that captures one or more images of an area proximate the ends 148 and 152 of head 144. In some implementations, the ear loss sensor 174 also includes image processing systems, such as an image processing system that processes the one or more captured images to identify any ears that are lost over the ends 148 and 152 of head 144. In some implementations, ear loss sensor 174 includes, for example, mechanical sensors, such as deflectable fingers that extend above the ends 148 and 152 of head 144 and are deflected by ears traveling over the top of head 144. In still other implementations, ear loss sensor 174 can be or include another type of sensor as well. Ear loss sensor 174 generates a signal indicative of detected ear loss. In one example, observation sensor system 117 is or includes an ear loss sensor.

The terrain sensor 176 detects the terrain over which agricultural harvester 100, 120 is traveling, the terrain of ahead of agricultural harvester 100, 120 in the direction of travel, or both. Therefore, in some instances, terrain sensor 176 includes, for example, one or more accelerometers, one or more inertial measurement units, an optical sensor that senses the slope of the terrain in front of agricultural harvester 100, 120, or any of a variety of other terrain sensors. Additionally, or alternatively, terrain sensors 176 may include (or utilize sensor data from) sensors on the head that detect a distance of the head (at various points along the width of the head) from the surface of the field. Terrain sensor 176 generates a signal indicative of the terrain. In one example, observation sensor system 117 is or include a terrain sensor.

Heading sensor 178 detects the heading of agricultural harvester 100, 120. In some implementations, heading sensor 178 includes, for example, a GNSS receiver that detects a current location of agricultural harvester 100, 120. Two measurements can be taken from the GNSS receiver to determine a direction of travel of agricultural harvester 100, 120. In some instances, heading sensor 178 includes, for example, a compass or other heading sensor that detects the heading of agricultural harvester 100, 120. Heading sensor 178 generates a signal indicative of the heading.

In some implementations, map input mechanism 180 is a computer system through which one or more different maps can be downloaded and stored or otherwise accessed by agricultural system 172. In some implementations, map input mechanism 180 is an interactive computer system that can obtain or access maps that are stored in a remote location. Map input mechanism 180 generates a signal indicative of information on the map. Thus, map input mechanism 180 can detect characteristics on the one or more maps and generate signals indicative of those characteristics. For instance, map input mechanism 180 can detect crop state based on a crop state map and generate a crop state signal indicative of the crop state. Map input mechanism 180 can detect a harvest state based on a harvest map and generate a crop state signal indicative of the harvest state. Map input mechanism 180 can detect weed characteristic(s) based on a weed map or a vegetative index map, or both, and generate a weed signal indicative of the weed characteristic(s). Map input mechanism 180 can detect a variety of other characteristics from a variety of other types of maps and generate a variety of other corresponding signals indicative of the variety of other characteristics.

Road mode sensor 182 detects when agricultural harvester 100, 120 is in, or is changing to, a road mode in which agricultural harvester 100, 120 is about to travel out of a field. Road mode sensor 182 may detect that agricultural harvester 100, 120 is in road mode by detecting that agricultural harvester 100, 120 is on a road, is no longer in a field, or is about to leave a field. Road mode sensor 182 may take a variety of different forms. For instance, in some implementations, road mode sensor 182 receives an input from a geographic position sensor 173 to identify a current position of agricultural harvester 100, 120. Road mode sensor 182 compares that geographic position against a map that is downloaded or received by map input mechanism 180 to determine where agricultural harvester 100, 120 is located on the map. The fields on the map and the roads on the map are identified beforehand or identified during runtime processing. Therefore, road mode sensor 182 determines whether agricultural harvester 100, 120 is in a field or at a location other than a field, such as on a road. In some implementations, if agricultural harvester 100, 120 is on a road (or at a location other than a field), then road mode sensor 182 detects that agricultural harvester 100, 120 is in road mode. In another example, road mode sensor 182 receives an input indicative of the ground speed of agricultural harvester 100, 120. If the ground speed of agricultural harvester 100, 120 exceeds a threshold level, this may indicate that agricultural harvester 100, 120 is in road mode. In such an instance, the road mode sensor 182 interprets a speed in excess of a threshold level as an indication that agricultural harvester 100, 120 is traveling along a road and, thus, in road mode. Further, in some implementations where head 144 is a foldable head 144, road mode sensor 182 detects the position of the foldable portions 124 and 126 or the position of actuators 132 and 138 to determine whether the head 144 is in the deployed position, is in the folded position, whether the head is being commanded to move from the deployed position to the folded position, or whether the header is being moved from the deployed position to the folded position. When the head is in the folded position, is being commanded to moved to the folded position, or is being moved to the folded position, this indicates that agricultural harvester 100, 120 is in the road mode or is about to be placed in the road mode. In other examples, such as where the head 144 is a rigid head, road mode sensor 182 may detect the operation or other characteristics of other components of the harvester 100, 120 to determine whether the harvester 100, 120 is in road mode, for instance, grain tank covers 177 being folded, being moved to a folded position, or commanded to fold may indicate that the agricultural harvester 100, 120 is on the road or is about to leave the field, and, thus, is in road mode. In some instances, road mode sensor 182 also detects an operator input through an operator interface mechanism 166 to determine whether agricultural harvester 100, 120 is in the road mode. For instance, operator 170 may depress a button or actuate another operator input mechanism such as any of the operator interface mechanisms 166 to place agricultural harvester 100, 120 in the road mode. The operator input is detected by road mode sensor 182 to determine whether agricultural harvester 100, 120 is in road mode. Road mode sensor 182 generates a signal indicative of whether agricultural harvester 100, 120 in in road mode. In some examples, an imaging system (e.g., observation sensor system 117) may detect when agricultural harvester 100, 120 is in, or is changing to a road mode.

Field mode sensor 184 may detect whether agricultural harvester 100, 120 is in the field mode. Detecting that agricultural harvester 100, 120 is in the field mode when agricultural harvester 100, 120 is in a field and is configured to perform a harvesting operation or is performing a harvesting operation. For instance, field mode sensor 184 detects whether the crop processing mechanisms in combine harvester 100, 120 are operating (such as whether threshing and separating mechanisms are operating, whether the gathering chain and rotors 108 and 110 on the head 144 are operating, among other things). For example, if the crop processing mechanisms are operating, then field mode sensor 184 detects that agricultural harvester 100, 120 is in the field mode. In some examples, field mode sensor 184 detects whether the crop processing mechanisms in combine harvester 100, 120 are being commanded to operate, such as through operator interface mechanisms 166, In some implementations, field mode sensor 184 compares a current geographic location of agricultural harvester 100, 120 against a map to determine whether agricultural harvester 100, 120 is in a field or in an area other than a field (such as on a road). Field mode sensor 184 determines that, if agricultural harvester 100, 120 is in a field, agricultural harvester 100, 120 is in field mode. In some instances, field mode sensor 184 receives an operator input through operator interface mechanisms 166 indicating that operator 170 has placed the agricultural harvester 100, 120 in field mode. In other examples, field mode sensor 184 may detect the operation or other characteristics of other components of the harvester 100, 120 to determine whether the harvester 100, 120 is in field mode, for instance, grain tank covers 177 being opened, being moved to an opened position, or commanded to open may indicate that the agricultural harvester 100, 120 is on the field or is about to enter a field, and, thus, is in field mode. Field mode sensor 184 generates a signal indicative of whether agricultural harvester 100, 120 is in field mode.

Adjacent pass harvest state sensor 186 detects whether crops in the field adjacent the current position of agricultural harvester 100, 120 have been harvested or are still unharvested. For instance, adjacent pass harvest state sensor 186 can determine whether the crops in the area of the field immediately adjacent the left-hand side of head 144 has been harvested as well as whether the crops in the field immediately adjacent the right-hand side of head 144 have been harvested. Adjacent pass crop state sensor 186 can thus include a processor that processes a harvest map that maps where crops in a field have already been harvested. Based upon the harvested locations on the harvest map, and the current location of agricultural harvester 100, 120, adjacent pass harvest state sensor 186 may generate an output indicating whether the crops have been harvested adjacent the sides of head 144. Adjacent pass harvest state sensor 186 may also include an image capture device, such as a camera, along with an image processing computer system that receives images captured by the image capture device and processes those images to identify items in the images, such as crop stalks, standing crops, harvested crops, or other items. Images of the field adjacent the sides of head 144 can be captured and image processing can be performed to determine whether crop is still standing or has been harvested. Adjacent pass harvest state sensor 186 can detect whether the crop adjacent the sides of head 144 have been harvested in other ways as well.

Weed sensor 188 detects characteristics of weeds, such as weed type and the intensity of weeds. Without limitation, weed intensity may include at least one of weed presence, weed population, weed growth stage, weed biomass, weed moisture, weed density, a height of weeds, a size of a weed plant, an age of weeds, or health condition of weeds at a location within an area. The measure of weed intensity may be a binary value (such as weed presence or weed absence), or a continuous value (such as a percentage of weeds in a defined area or volume) or a set of discrete values (such as low, medium, or high weed intensity values). Without limitation, weed type may include categorization of weeds, such as identification of species or a broader classification, such as vine type weeds vs. non-vine type weeds. In one example, observation sensor system 117 is or includes adjacent pass harvest state sensor 186.

A vegetative index map illustratively maps vegetative index values (which may be indicative of vegetative growth) across different geographic locations in a field of interest. One example of a vegetative index includes a normalized difference vegetation index (NDVI). There are many other vegetative indices that are within the scope of the present disclosure. In some examples, a vegetative index may be derived from sensor readings of one or more bands of electromagnetic radiation reflected by the plants. Without limitations, these bands may be in the microwave, infrared, visible, or ultraviolet portions of the electromagnetic spectrum.

In some implementations, a vegetative index map is used to identify the presence and location of vegetation. In some examples, these maps enable weeds to be identified and georeferenced in the presence of bare soil, crop residue, or other plants, including crop or other weeds. For instance, at the end of a growing season, when a crop is mature, the crop plants may show a reduced level of live, growing vegetation. However, weeds often persist in a growing state after the maturity of the crop. Therefore, if a vegetative index map is generated relatively late in the growing season, the vegetative index map may be indicative of the location of weeds in the field. In some instances, though, the vegetative index map may be less useful (or not at all useful) in identifying an intensity of weeds in a weed patch or the types of weeds in a weed patch. Thus, in some instances, a vegetative index map may have a reduced usefulness in predicting how to control an agricultural harvester as the agricultural harvester moves through the field.

Weed sensor 188 may, thus, include an image capture device that captures images of the field immediately forward of agricultural harvester 100, 120, along with an image processing system that processes the image to identify the intensity of weeds. Weed sensor 188 may also include a map accessing system that obtains vegetative index values from a vegetative index map, such as an NDVI map, along with the current location of agricultural harvester 100, 120, to determine the intensity of weeds. Weed sensor 188 can include other weed sensors as well. In one example, observation sensor system 117 is or includes weed sensor 188.

Ground speed sensor 190 may detect the ground speed of agricultural harvester 100, 120. Ground speed sensor 190 may thus be a sensor that senses the rotational speed of an axel or another sensor that generates an output indicative of the ground speed of agricultural harvester 100, 120.

Hair pinning sensor 181 detects hair pinning on the end dividers 146, 150. Hair pinning is the accumulation of vegetation on an edge of the end dividers, such as the front edge of the end dividers. Hair pinning sensor 181, in one example, includes a camera or other optical sensor that captures images including the end dividers. The captured images are then processed to receive the vegetation hair pinning information. Hair pinning sensor 181, in one example, includes one or more operator interface mechanism 166 that allows a user to provide hair pinning information. In one example, observation sensor system 117 is or includes hair pinning sensor 181.

Wrapping sensor 183 detects wrapping on the end dividers. Wrapping is the accumulation of vegetation (or other objects) around an active end divider. Wrapping sensor 183, in one example, includes a camera or other optical sensor that captures images including the end dividers. The captured images are then processed to receive the wrapping information. Wrapping sensor 183, in one example, includes one or more operator interface mechanism 166 that allows a user to provide wrapping information. In some examples, wrapping sensor 183 includes a force sensor. In one example, observation sensor system 117 is or includes wrapping sensor 183.

Crop state sensor 185 detects the crop state proximate agricultural system 172. Crop state sensor 185, in one example, includes a camera or other optical sensor that captures images of the field proximate agricultural machine 100, 120. The captured images are then processed to receive the crop state adjacent to agricultural machine 100, 120 (e.g., in front of, behind, or to the sides of agricultural machine 100, 120). Thus, crop state sensor 185 can detect crop state of crop in the current row that is being harvested as well as the row(s) adjacent to agricultural machine 100, 120. Crop state sensor 185, in one example, includes one or more operator interface mechanism 166 that allows a user to provide crop state information. Crop state information can be indicative of the amount of downed crop, the magnitude of the downing (e.g., fully down, half down, slightly down, etc.), the direction of downing, etc. In one example, observation sensor system 117 is or includes crop state sensor 185.

In other examples, the crop state can be derived from a map of the field, such as a crop state map that maps crop state values to different geographic locations across the field. The crop state values can be indicative of the locations of downed crop, the amount of downed crop, the magnitude of downing, and the direction of downing.

Material flow sensor 187 detects material flow falling over the side of head 144. Material flow sensor 187, in one example, includes a camera or other optical sensor that captures images proximate head 144. The captured images are then processed to receive the material flow over the sides of head 144. Material flow sensor 187, in one example, includes one or more operator interface mechanism 166 that allows a user to provide material flow information. In some examples, material flow sensor 187 includes radar, sonar or lidar systems. In one example, observation sensor system 117 is or includes material flow sensor 187.

Ear orientation sensor 189 detects the orientation of ears of corn on the crop to be harvested. Ear orientation sensor 189, in one example, includes a camera or other optical sensor that captures images of the crop to be harvested. The captured images are then processed to receive the ear orientation information. Ear orientation sensor 189, in one example, includes one or more operator interface mechanism 166 that allows a user to provide ear orientation information. In one example, observation sensor system 117 is or includes ear orientation sensor 189.

Operator interface mechanisms 166 may include a wide variety of different operator interface mechanisms that can be used to provide information to operator 170 and receive inputs from operator 170. Therefore, operator interface mechanisms 166 include, for example, a steering wheel, one or more joysticks, buttons, levers, linkages, pedals, or an operator interface display screen that generates displays for operator 170. An operator interface display screen may also display a graphical user interface with operator actuatable mechanisms (such as links, buttons, icons, etc.) that can be actuated by operator 170 to provide an input to agricultural system 172. The operator actuatable mechanisms can be actuated using a point and click device, such as a mouse or trackball, or by a touch gesture where the operator interface display mechanism is a touch sensitive display screen. The operator interface mechanisms 166 may include a microphone and speaker where speech recognition and speech synthesis are provided. The operator interface mechanisms 166 may also include other audio, visual, or haptic devices.

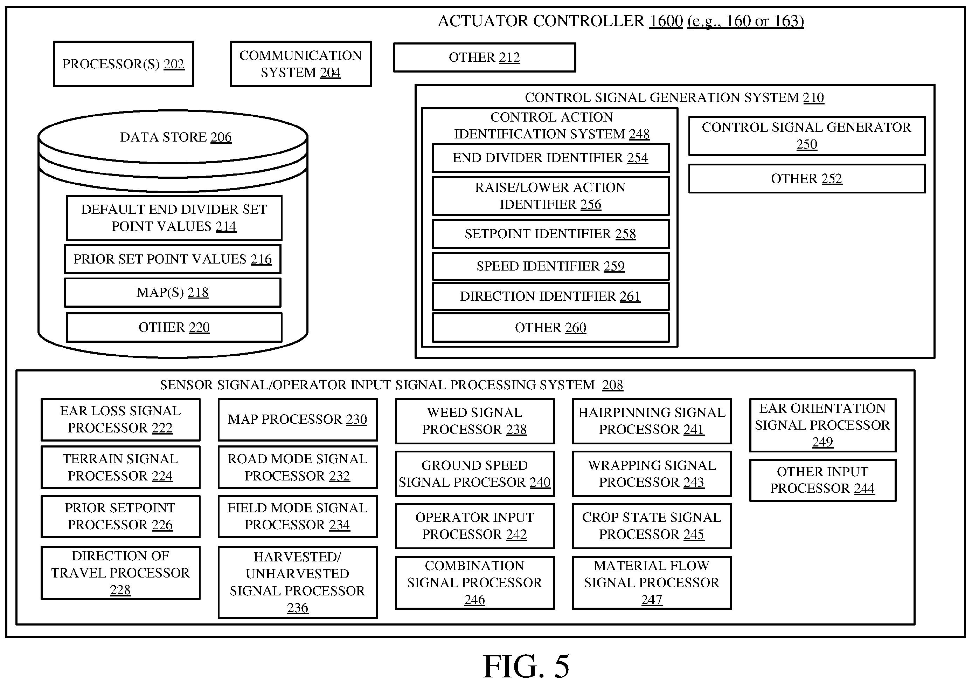

FIG. 5 is a block diagram showing one example of actuator controller 1600. Actuator controller 1600 can be actuator controller 160 or actuator controller 163. Actuator controller 1600 includes one or more processors 202, communication system 204, data store 206, sensor signal/operator input signal processing system 208, control signal generation system 210, and other items 212.

Before describing actuator controller 1600 in more detail, and by way of overview, data store 206 stores maps and data values that can be used by sensor signal/operator input signal processing system 208. Sensor signal/operator input signal processing system 208 receives the signals from sensors 164 and processes the signals to detect variables indicated by the sensor signals. Sensor signal/operator input signal processing system 208 provides an output indicative of the detected variables to control signal generation system 210. Control signal generation system 210 then generates control signals that are output from actuator controller 1600 (e.g., 160) and transmitted to actuators 158 and 159 to control actuators 158 and 159 to move end dividers 146 and 150 to the desired positions or generates control signals that are output from actuator controller 1600 (e.g., 163) and transmitted to actuators 161 to control actuators 161 to control rotation of end dividers 147.

Data store 206 includes information that is used by one or more of sensor signal/operator input signal processing system 208 or control signal generation system 210. Therefore, as an example, data store 206 may include default end divider set point values 214 (e.g., default position values, default rotation speed values, etc.), prior end divider set point values 216 (e.g., prior position values, prior rotation speed values, etc.), maps 218, and other items 220.

Sensor signal/operator input signal processing system 208 may include ear loss signal processor 222, terrain signal processor 224, prior set point processor 226, direction of travel processor 228, map processor 230, road mode signal processor 232, field mode signal processor 234, harvested/unharvested signal processor 236, weed signal processor 238, ground speed signal processor 240, operator input processor 242, other input processor 244, and combination signal processor 246. Control signal generation system 210 may include control action identification system 248, control signal generator 250, and other items 252. Control action identification system 248 may include end divider identifier 254, raise/lower action identifier 256, set point identifier 258, speed identifier 259, direction identifier 261, and other items 260.

Ear loss signal processor 222 receives a signal from ear loss sensor 174 and processes that signal to determine whether ear loss is occurring. Further, if ear loss is occurring, ear loss signal processor 222 determines the location on header 144 where the ear loss is occurring. The ear loss may be occurring over either end or both ends of head 144, for example. When ear loss is detected over one or both ends of the head 144, ear loss signal processor 222 generates a signal indicative thereof and control action identification system identifies an end divider command commanding one or both of end dividers 146 and 150 to be raised to prevent ear loss at the end of the head 144 where ear loss is detected. In another example, ear loss, in the form of ears being knocked off of crop plants in adjacent crop row(s), may be occurring due to contact between the end dividers 146 or 150, or both, and the crop plants in the adjacent crop row(s). When ear loss, in the form of ears being knocked off of crop plants, is detected, ear loss signal processor 222 generates a signal indicative thereof and control action identification system identifies an end divider command commanding one or both of end dividers 146 and 150 to be lowered to prevent ears from being knocked off of crop plants in adjacent crop row(s). In another example, when ear loss is detected, ear loss signal processor 222 generates a signal indicative thereof and control action identification system identifies an end divider command commanding one or both end dividers 147, such as to adjust a speed of rotation (including stopping or starting) of one or both end dividers 147.

Terrain signal processor 224 receives the signal from terrain sensor 176 and determines whether the terrain is sloping, so that one of the ends of header 144 is lower than the other end of header 144. Terrain signal processor 224 also determines whether agricultural harvester 100, 120 is approaching a trench or other terrain feature. If the terrain is sloping so that one of the ends of header 144 is lower than the other end of header 144 or if agricultural harvester 100, 120 is approaching a trench, then terrain signal processor 224 outputs a signal to control signal generation system 210 indicating the direction of slope or the location of the trench and control action identification system 248 identifies an end divider command so that the position of end dividers 146 and 150 can be controlled to avoid ear loss due to the terrain. Control action identification system 248 may also identify an end divider command commanding that one or both end dividers 146 and 150 be raised. For instance, if the terrain slopes so that the left end of header 144 is lower than the right end of header 144, then end divider 146 is raised to avoid ear loss over the left end of header 144. If agricultural harvester 100, 120 is about to traverse a trench, then both end dividers 146 and 150 can be raised to avoid ear loss over both ends of the header 144 while agricultural harvester 100, 120 traverses the trench.

Prior set point processor 226 accesses the prior set point values 216 in data store 206. The prior set point values 216 indicate the position to which end dividers 146 and 150 have been set in the past or the speeds of rotation at which end dividers 147 have been set in the past. The prior set point values 216 are also geo-referenced values to indicate the location of agricultural harvester 100, 120 corresponding to the prior set point value 216. These geo-referenced set point values 216 may be used in automatically controlling the positions of end dividers 146 and 150. For instance, where operator 170 disengages the automatic control of end dividers 146 and 150, and then re-engages the automated control of end dividers 146 and 150, then prior set point processor 226 can obtain the prior set point values 216 for the end dividers 146 and 150 just prior to disengaging the automatic control of the end dividers 146 and 150. Prior set point processor 226 may then generate an output signal to control signal generation system 210 indicating the prior set point values. As a result, the end dividers 146 and 150 can be automatically set to the prior positions.

Direction of travel processor 228 receives a signal from heading sensor 178 and identifies the direction of travel of agricultural harvester 100, 120. By way of example, it may be that the operator 170 had controlled the end divider position so that the right end divider 150 was in the raised position while the left end divider 146 was in the retracted position. This may happen, for instance, because the crop to the right of the head 144 has already been harvested while the crop to the left of head 144 has not been harvested, and a raised end divider may dislodge or otherwise separate ears from the unharvested row adjacent the left side of head 144. However, once the agricultural harvester 100, 120 makes a headland turn, then direction of travel processor 228 determines that the agricultural harvester is now heading in the opposite direction from the last pass and control action identification system 248 identifies that now the left end divider 146 should be moved to its raised position and the right end divider 150 should be moved to its retracted position because now the unharvested crop is to the right of head 144. Direction of travel processor 228 may provide an output indicative of the direction of travel of agricultural harvester 100, 120 and the desired end divider positions based upon the direction of travel. In another example, based on an indication of the direction of travel of agricultural harvester 100, 120 from direction of travel processor 228, control action identification system 248 identifies speeds of rotation for the end dividers 147, such as to slow rotation or stop rotation of one end divider 147 and to increase rotation or start rotation of the other end divider 147.

Map processor 230 may process any maps that are received through map input mechanism 180. Map processor 230 may receive, for instance, a harvest map to determine what portions of the current field are harvested and where those portions lie relative to the current position of agricultural harvester 100, 120 and relative to the direction of travel of agricultural harvester 100, 120. Map processor 230 may determine the location of agricultural harvester 100, 120 relative to the edges of the field, relative to fence lines or tree lines, or relative to other features, such as other features noted on a map. Map processor 230 may process a vegetative index map to identify the location of weed patches. Map processor 230 may process a crop state map to identify the locations of downed crop, the amounts of downed crop, the magnitude of downing, and the direction of downing. Map processor 230 may process a harvest map to identify the harvest state (e.g., harvested or unharvested) of crop in adjacent rows. Map processor 230 may process a weed map to identify weed characteristics, such as weed presence, weed type, weed intensity, as well as various other weed characteristics. Map processor 230 may process a map to identify whether agricultural harvester 100, 120 is currently located in a field or on a road or located elsewhere. In some implementations, map processor 230 may be used as the road mode sensor 182 and generate an output signal indicating that agricultural harvester 100, 120 is located on a road. Map processor 230 may generate an output signal indicative of the features on one or more maps and control action identification system 248 can identify commanded end divider actions based on the features on the one or more maps.

Road mode signal processor 232 receives an input from road mode sensor 182 and determines whether agricultural harvester 100, 120 is in road mode or is being moved into the road mode from the field mode. Agricultural harvester 100, 120 is in road mode when it is physically configured to travel on the road as opposed to through a field. For instance, if road mode sensor 182 detects that the actuators 132 and 138 on a foldable head are being moved from a position in which the head is unfolded to a position in which the head is folded, road mode sensor 182 may provide an output indicative of the changing positions of actuators 132 and 138 to road mode signal processor 232. Based upon the signal from road mode sensor 182, road mode signal processor 232 may determine that agricultural harvester 100, 120 is being moved to the road mode and provide an output indicating that agricultural harvester 100, 120 is being moved to the road mode and control action identification system 248 identifies a command to lower the end dividers 146 and 150 or to stop rotation of end dividers 247 to control signal generator 250.

Field mode signal processor 234 receives an input from field mode sensor 184 and determines whether agricultural harvester 100, 120 is in the field mode and generates an output indicating whether agricultural harvester 100, 120 is in the field mode. Agricultural harvester 100, 120 is in field mode when it is physically configured to travel through a field as opposed to on a road. For instance, if field mode sensor 184 provides an output indicating that the crop processing systems in agricultural harvester 100, 120 are operating, field mode signal processor 234 may determine that agricultural harvester 100, 120 is in the field mode. Field mode signal processor 234 may then generate an output indicating that agricultural harvester 100, 120 is in field mode and control action identification system 248 identifies a commanded end divider action, such as a commanded end divider action that commands end divider position so that the end dividers 146, 150 should be raised or an end divider action that commands end dividers 147 should begin rotation.

Harvested/unharvested signal processor 236 may receive a signal from adjacent pass harvest state sensor 186 and determine whether the crop adjacent the sides of head 144 has been harvested or is still unharvested. Based upon the signal from adjacent pass harvest state sensor 186, harvested/unharvested signal processor 236 may determine, for instance, that the crop on the right side of head 144 has already been harvested, while the crop on the left side of head 144 has not been harvested. Thus, control action identification system 248 may command the end divider 150 to be raised and end divider 146 to be lowered or may command one end divider 147 to begin or increase rotation and the other end divider 147 to stop or decrease rotation.

Weed signal processor 238 may receive a signal from weed sensor 188 and determine whether weeds are currently being encountered by head 144. Weed signal processor 238 may also determine the intensity of the weeds. Weed signal processor 238 may also determine the type of weeds (e.g., viny or non-viny). For instance, where weed sensor 188 is an optical sensor and provides an output indicative of the presence of weeds over a pre-defined area (e.g., field of view of the sensor), weed signal processor 238 may process that signal to indicate that weeds are present, the type of weeds, and that the intensity of the weeds is at a certain intensity level. Control action identification system 248 may then command the end dividers 146, 150 to be lowered to avoid entanglement in heavy weeds or that the end dividers 146 and 150 be moved to another position or may then command the one or more end dividers 147 to control their rotation based on the weed characteristics.

Ground speed signal processor 240 may receive an input signal from ground speed sensor 190 indicative of the ground speed of agricultural harvester 100, 120. Ground speed signal processor 240 may process that signal to determine the ground speed of agricultural harvester 100, 120, which can be used to determine that agricultural harvester 100, 120 is in road mode or field mode, for example. Control action identification system 248 can the identify a command commanding whether the end dividers 146 and 150 should be raised or lowered or whether the rotation of end dividers 147 should be changed. Thus, control action identification system 248 may identify an end divider command (to control end dividers 146, 150 or end dividers 147) based upon the ground speed.

Operator input processor 242 may receive a signal from operator interface mechanisms 166 indicative of an input from operator 170. Operator input processor 242 may process the operator input to indicate the desired positions of end dividers 146 and 150 or desired rotations of end dividers 147 based upon the operator input. By way of example, it may be that operator 170 provides an input through operator interface mechanisms 166 commanding that end divider 146 be raised to the fully raised position and commanding end divider 150 to be raised only to a halfway point between the fully retracted position and the fully raised position. In another example, it may be that the operator 170 provides an input through operator interface mechanisms 166 commanding that rotational speed of one end divider 147 be increased while the rotational speed of another end divider 147 be decreased. These are merely examples. Control action identification system 248 may then identify an end divider command that commands an end divider position or an end divider rotation based upon the detected operator input. Other input processor 244 may receive inputs from other sensors.

Hair pinning signal processor 241 may receive a signal from hair pinning sensor 181 indicative of vegetation hair pinning on one or more surfaces of the agricultural harvester 100, 120. Hair pinning signal processor 241 may process that signal to determine that vegetation is hair pinning, for example, on one or more end divider 146, 150. Hair pinning signal processor 241 may also determine the intensity of the hair pinning. For instance, where hair pinning sensor 181 is an optical sensor and provides an output indicative of the presence of hair pinning on a portion of agricultural machine 100, 120, hair pinning signal processor 241 may process that signal to indicate that hair pinning is present, and that the intensity or amount of hair pinning is at a certain intensity level. Hair pinning signal processor 241 may also determine the type of vegetation causing the hair pinning. For instance, where hair pinning sensor 181 is an optical sensor and provides an output indicative of the presence of hair pinning on a portion of agricultural machine 100, 120, hair pinning signal processor 241 may process that signal to indicate that hair pinning is present, and that the hair pinning is being caused by a specific type of vegetation (e.g., a specific type of weed, the crop plants, or a specific portion of a plant). Control action identification system 248 may then identify an end divider command to control the end dividers 146, 150 based on the detected hair pinning, such as to lower one or both of end dividers 146, 150.

Wrapping signal processor 243 may receive a signal from wrapping sensor 183 indicative of vegetation wrapping on one or more surfaces of agricultural machine 100, 120. Wrapping signal processor 243 may process that signal to determine that an object is wrapping, for example, on end dividers 147. Wrapping signal processor 243 may also determine the intensity of the wrapping. For instance, where wrapping signal processor 243 is an optical sensor and provides an output indicative of the presence of wrapping on a portion of agricultural machine 100, 120, wrapping signal processor 243 may process that signal to indicate that wrapping is present, and that the intensity or amount of wrapping is at a certain intensity level. Wrapping signal processor 243 may also determine the type of vegetation or object causing the wrapping. For instance, where wrapping sensor 183 is an optical sensor and provides an output indicative of the presence of wrapping on a portion of agricultural machine 100, 120, wrapping signal processor 243 may process that signal to indicate that wrapping is present, and that the wrapping is being caused by a specific object (e.g., a piece of wire or twine, a specific type of weed, the crop plants, or a specific portion of a plant). Action signal identification system 248 may then identify an end divider command to control the end dividers 147 based on the detected wrapping, such as to reduce, reverse, or stop rotation of one or both of end dividers 147.

Crop state signal processor 245 may receive a signal from crop state sensor 185 indicative of the crop state of crop proximate agricultural machine 100, 120. Crop state signal processor 245 may process that signal to determine that crop proximate to agricultural machine 100, 120 is in some state of being downed. Crop state signal processor 245 may also determine the intensity (magnitude) of the downing. For instance, where crop state sensor 185 is an optical sensor and provides an output indicative of the presence of downed crop proximate agricultural machine 100, 120, crop state signal processor 245 may process that signal to indicate that downed crop is present, and that the intensity (e.g., not downed, partially downed, fully downed, etc.) or amount of downed crop is at a certain intensity level. Crop state signal processor 245 may also determine the direction (e.g., compass direction, or direction relative to the agricultural harvester) of the downed crop. For instance, where crop state sensor 185 provides an output indicative of the presence of downed crop proximate agricultural machine 100, 120, crop state signal processor 245 may process that signal to indicate that downed crop is present, and that the crop is downed to the East. Action signal identification system 248 may then identify an end divider command to control the end dividers 146, 150 (e.g., raise or lower) or the end dividers 147 (e.g., adjust rotation) based on the detected crop state.

Material flow signal processor 247 may receive a signal from material flow sensor 187 indicative of material flow over the side of head 144. Material flow signal processor 247 may process that signal to determine that material is flowing over the side of head 144. Material flow signal processor 247 may also determine the intensity of the material flow. For instance, where material flow sensor 187 is an optical sensor and provides an output indicative of the presence of material flow over the side of head 144, material flow signal processor 247 may process that signal to indicate that material flow over the side is present, and that the intensity or amount of material flow over the side of head 144 is at a certain intensity level. Material flow signal processor 247 may also determine the type of material flowing over the side. For instance, where material flow sensor 187 is an optical sensor and provides an output indicative of the presence of material flow over the side of head 144, material flow signal processor 247 may process that signal to indicate that material flow over the side is present, and that the material flowing over the size comprises specific types of material (e.g., weeds, the crop plants, or a specific portion of a plant). Action signal identification system 248 may then identify an end divider command to control the end dividers 146, 150 (e.g., raise or lower) or the end dividers 147 (e.g., adjust rotation) based on the detected material flow.

Ear orientation signal processor 249 may receive a signal from ear orientation sensor 189 indicative of ear orientation proximate agricultural machine 100, 120. Ear orientation signal processor 249 may process that signal to determine the orientation of ears of corn. Ear orientation signal processor 249 may also determine the distribution of varying ear orientations. For instance, where ear orientation sensor 189 is an optical sensor and provides an output indicative of the presence of ear orientation, ear orientation signal processor 249 may process that signal to indicate that a first percent of ears are in a first orientation, a second percent of ears are in a second orientation, etc. Action signal identification system 248 may then identify an end divider command to control the end dividers 146, 150 (e.g., raise or lower) or the end dividers 147 (e.g., adjust rotation) based on the detected crop state.

Combination signal processor 246 may receive inputs from a combination of the different sensors 164 and operator interface mechanisms 166 and generate an output indicative of the desired position of end dividers 146 and 150. For instance, combination signal processor 246 may receive an input from geographic position sensor 173 identifying the geographic position of agricultural harvester 100, 120. Combination signal processor 246 may also receive an input from map input mechanism 180 that includes a map of field boundaries with fences. Combination signal processor 246 may also receive an input from heading sensor 178 that identifies the heading of agricultural harvester 100, 120. Based upon the location of harvester 100, 120 relative to the fences identified in the map, and based upon the heading of agricultural harvester 100, 120 detected by heading sensor 178, control action identification system 248 may identify an end divider command that that commands the end divider 146, 150 closest to the fence line should be moved to the retracted position in order to avoid being caught on the fence or that commands the end divider 147 to stop or slow rotation to avoid being caught in the fence. Control action identification system 248may identify an end divider command indicative of a commanded position or a commanded rotation of the end divider(s) based upon the combination of inputs.

Once control signal generation system 210 receives one or more inputs from sensor signal/operator input signal processing system 208, control action identification system 248 identifies the control action (e.g., end divider command) that is to be taken and control signal generator 250 generates control signals to execute the identified control action. For example, assume that the end divider command from control action identification system 248 indicates that end divider 146 should be moved to the fully retracted position and end divider 150 should be raised to a raised position midway between the retracted position and fully raised position. End divider identifier 254 then identifies which end dividers 146 and 150 is affected by the end divider command. In the present example, both end dividers 146 and 150 will be affected by the end divider command. Raise/lower action identifier 256 determines whether the end divider command is to raise or lower a particular end divider, and set point identifier 258 identifies the set point (which may be indicative of the desired end divider position) for the end divider that is to be raised or lowered. Continuing with the present example in which the end divider 150 is to be raised to the midway point between the fully retracted and fully raised positions, end divider identifier 254 identifies the affected end divider as end divider 150. Raise/lower action identifier 256 identifies that the end divider 150 is to be raised and set point identifier 258 identifies, from the end divider command, that the set point for end divider 150 is the midway point between the fully retracted position and the fully raised position. Control action identification system 248 provides an output to control signal generator 250 indicating that end divider 150 is to be raised to the midpoint position. Control signal generator 250 then generates control signals to control actuator 159 to raise end divider 150 to the midpoint position. Position/height sensor 194 may sense the position or height of end divider 150 and provide a feedback signal to control signal generator 250. In another example, control signal generator 250 generates control signals in an open loop fashion in which the set point is commanded, and no feedback is used.

In another example, assume that the end divider command from control action identification system 248 indicates that the rotation of one end divider 147 should be increased to 80% (or given RPMs) speed and the rotation of another end divider 147 should be decreased to 50% (or given RPMs) speed. End divider identifier 254 then identifies which end dividers 147 is affected by the end divider command. In the present example, both end dividers 147 will be affected by the end divider command. Speed identifier 259 determines whether the end divider command is to raise or lower the rotational speed of a particular end divider, and set point identifier 258 identifies the set point (which may be indicative of the desired end divider rotational speed) for the end divider that is to be increased or decreased in speed. Continuing with the present example in which the rotational speed of one end divider 147 is to be increased to 80%, end divider identifier 254 identifies the affected end divider 147 (e.g., the end divider 147 on a first end of head 144). Speed identifier 259 identifies that the rotational speed of the end divider 147 on the first end is to be increased and set point identifier 258 identifies, from the end divider command, that the set point for end divider 147 is 80% (or given RPMs). Control action identification system 248 provides an output to control signal generator 250 indicating that the rotation of the end divider 147 on the first end is to be increased to the set point. Control signal generator 250 then generates control signals to control actuator 161 to increase the speed of the identified end divider 147 to the set point. Speed sensor 197 may sense the speed of the end divider 147 on the first end and provide a feedback signal to control signal generator 250. In another example, control signal generator 250 generates control signals in an open loop fashion in which the set point is commanded, and no feedback is used.

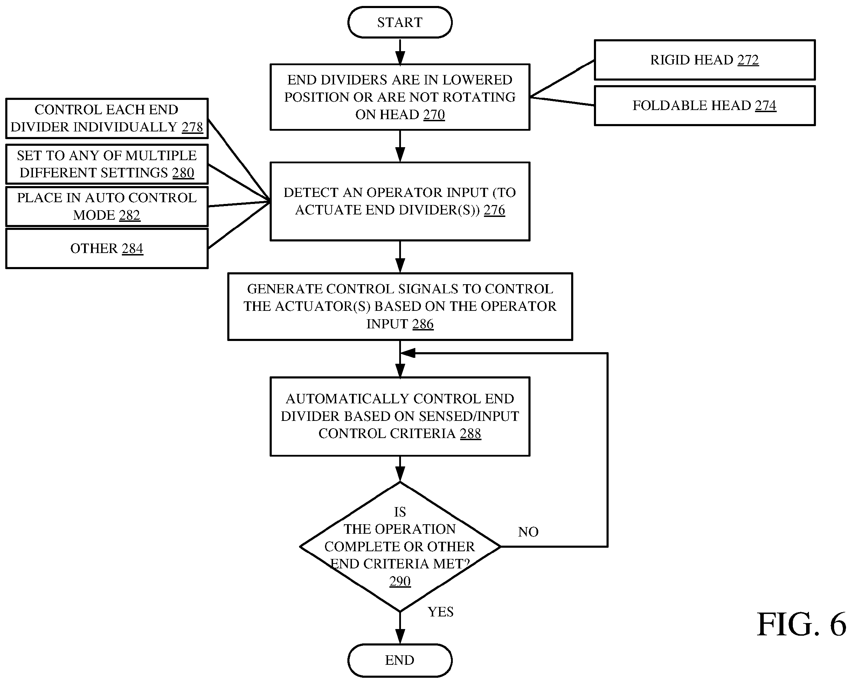

FIG. 6 is a flow diagram illustrating one example of the operation of agricultural system 172 in controlling the end dividers (e.g., 146 and 150 or 147).

The present description will proceed with respect to head 144, but it will be appreciated that the description could be applied to head 104 shown in FIG. 1 or head 122 shown in FIG. 2 or to a different head. It is first assumed that the end dividers are in the lowered or retracted position on the head 144 or, if active end dividers, then it is assumed that the end dividers are not rotating. Also, for purposes of the description of FIG. 6, it is assumed that agricultural harvester 100, 120 is just entering a field to begin harvesting in the field. Having the end dividers in the lowered or retracted position on the head 144 or non-rotating (where active end dividers) is indicated by block 270 in the flow diagram of FIG. 6. The head could be a rigid head, such as head 104 or 144, and as indicated by block 272 in the flow diagram of FIG. 6. The head could also be a foldable head, such as head 122 illustrated in FIG. 2, and as indicated by block 274 in the flow diagram of FIG. 6.

Operator 170 then provides an operator input to actuate the end dividers, such as to raise the end dividers 146, 150 or to initiate rotation of end dividers 147. In the example illustrated in FIG. 6, operator 170 provides that input through an operator interface mechanism 166 that is located in the operator compartment 103 of agricultural harvester 100, 120, as indicated by block 276 in the flow diagram of FIG. 6. However, as described above, operator 170 may be remote or may be an automated system. In one example, the end dividers 146 and 150 can be raised to default positions based on default end divider position values 214 or to other positions. In one example, the end dividers 147 can be rotated at default speeds based on default end divider speed values 214.

In one example, the end dividers 146 and 150 are each configured with an actuator 158 and 159, respectively, so that each end dividers 146 and 150 can be controlled individually as indicated by block 278. In one example, the end dividers 147 are each configured with an actuator 161, respectively, so that each end divider 147 can be controlled individually as indicated by block 278. In one example, block 280 shows that the actuators 158 and 159 can be set to multiple different positions between the fully retracted and fully raised positions so that end dividers 146 and 150 can be set to any of multiple different heights. In one example, block 280 shows that actuators 161 can be set to multiple different settings such that end dividers 147 can be set to any of a variety of different speeds of rotation. In one example, block 282 shows that operator 170 can provide an input to actuator controller 160 so that actuator controller 160 is placed in an auto-control mode so that actuator controller 160 automatically controls the height of end dividers 146 and 150 based upon inputs from input mechanism(s) 162. In one example, block 282 shows that operator 170 can provide an input to actuator controller 163 so that actuator controller 163 is placed in auto-control mode so that actuator controller 163 automatically controls the rotation of end dividers 147. In one example, automatically means that the operation is performed without further operator involvement except, perhaps, to initiate or authorize the operation. Block 284 shows that operator 170 may provide an operator input in other ways, and the operator input may be detected in other ways as well.

In one example, control action identifier system 248 then identifies the end dividers that are being commanded, and determines that the commanded action is to raise the end dividers 146 and 150. Set point identifier 258 identifies the set point of the command, indicating that particular position of end dividers 146 and 150 relative to their fully retracted or fully raised positions. Block 286 shows that control signal generator 250 then generates control signals to control the actuators 158 and 159 to thereby move end dividers 146 and 150, respectively, to the commanded positions.

Keeping with the above example, block 288 shows that actuator controller 160 then begins to automatically control the position of end dividers 146 and 150 based upon the inputs from input mechanisms 162. In one example, the automated control of the position of end dividers 146 and 150 can continue until the harvesting operation is complete or until some other end criteria are met, as indicated by block 290 in the flow diagram of FIG. 6.

In another example, control action identifier system 248 then identifies the end dividers that are being commanded, and determines that the commanded action is to control rotation of the end dividers 147. Set point identifier identifies the set point of the command, indicating that particular rotation of end dividers 147 relative to their range of rotation. Block 286 shows that control signal generator 250 the generates control signals to control the actuators 161 to thereby actuate end dividers 147, respectively, based on the commanded rotation.

Keeping with the above example, block 288 shows that actuator controller 163 then begins to automatically control the rotation (e.g., speed and/or direction) of end dividers 147 based upon the inputs from input mechanisms 162. In one example, the automated control of the rotation of end dividers 147 can continue until the harvesting operation is complete or until some other end criteria are met, as indicated by block 290 in the flow diagram of FIG. 6.

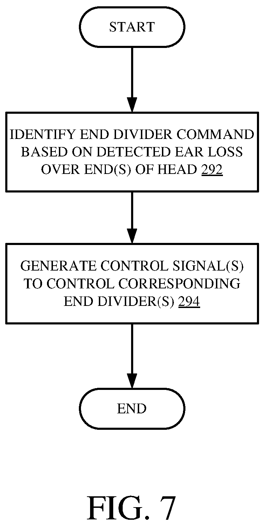

FIGS. 7-19 are flow diagrams showing different examples of how actuator controller 1600 (e.g., 160 or 163) can automatically control the end dividers (e.g., 146 and 250 or 147). In the example shown in FIG. 7, ear loss sensor 174 or material flow signal processor 247 generates a signal indicative of an ear loss over one or both of the ends of the head 144 and ear loss signal processor 222 or material flow signal processor 247 processes that signal to identify ear loss over one or both of the ends of head 144. Control action identification system 248 then identifies an end divider command that the end divider(s) on the same side(s) of head 144 where the ear loss occurred should be adjusted or actuated, such as being raised based on the end divider command or increasing the rotational speed based on the end divider command. Block 292 shows that control action identifier system 248 then identifies which end divider(s) are to be controlled. Block 294 shows that control signal generator 250 generates control signals to actuate (e.g., raise, increase rotation of, etc.) the corresponding end divider(s). For example, if material is falling over the side of head 144, the rotation speed of an active end divider can be increased or an end divider can be extended (e.g., raised). Control signal generation system then generates control signals to actuate (e.g., raise or lower, adjust speed of rotation, etc.) of one or more end dividers.

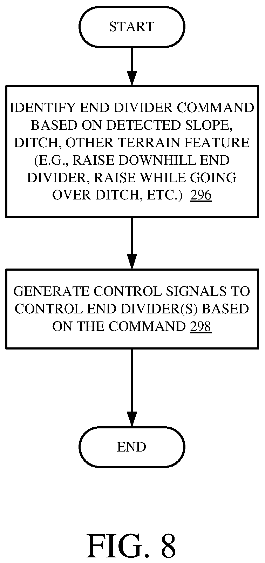

FIG. 8 shows an example in which terrain sensor 176 generates a signal indicative of a terrain feature that may be useful in determining whether to actuate (e.g., raise or lower, adjust the rotational speed of, etc.) one or more end dividers. Terrain signal processor 224 processes that signal to detect a slope, ditch, or other terrain characteristic. Control action identification system 248 then identifies an end divider command indicative of how to command the end dividers and which end divider(s) to command based upon the detected terrain. Block 296 shows identifying the end divider command.

Control signal generation system 210 then generates control signals to actuate one or more of the end dividers based upon the identified end divider command. For instance, terrain signal processor 224 may generate a signal identifying a downhill end divider and control action identification system 248 may identify a command indicating that the downhill end divider should be raised. In another example, terrain signal processor 224 may also determine that the terrain signal output by terrain sensor 176 shows an upcoming ditch. Control action identification system 248 may then determine that both end dividers should be raised while the agricultural harvester 100, 120 traverses the ditch and generates an end divider command. In another example, terrain signal processor 224 may also determine that the terrain signal output by terrain sensor 176 shows that the harvester (or head) will be rolled (e.g., one side of the head will be lower than another side of the head) due to upcoming terrain. Control action identification system 248 may then determine that the end divider on the lower end should be actuated (e.g., increase rotational speed) and generates an end divider command. Block 298 shows that control signal generator 250 then generates control signals to actuate the end dividers based upon the signal from terrain signal processor 224 and the action identified by control action identification system 248.

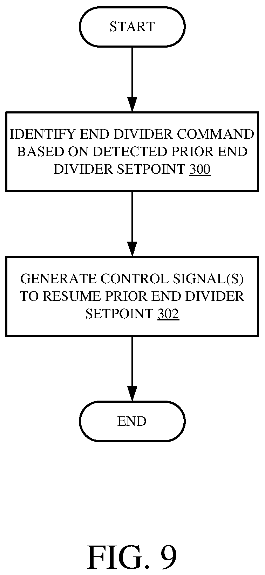

FIG. 9 shows an example in which prior set point processor 226 identifies prior set points that should be used for setting the positions or speeds of rotation of the end dividers and sends a corresponding signal. Control action identification system 248 then identifies an end divider command based on the prior set point(s). Identifying the end divider command based on prior divider set points is indicated by block 300 and generating control signals to control actuators to resume the prior positions or speeds of end dividers is indicated by block 302. For instance, actuators 158 and 159 may be controlled to resume the prior positions of end dividers 146 and 150. In another example, actuators 161 may be controlled to resume the prior rotational speeds of end dividers 147.

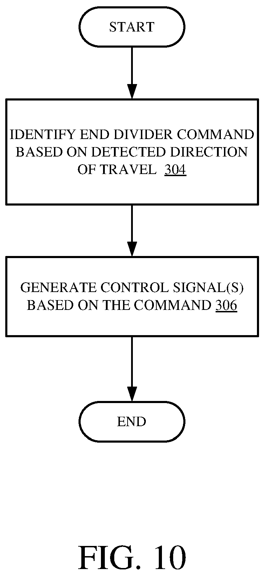

FIG. 10 shows an example in which direction of travel processor 228 receives an input from heading sensor 178 indicating the direction of travel of the agricultural harvester 100, 120 and generating a signal indicative of the direction of travel o the agricultural harvester. Control action identification system 248 then identifies an end divider command indicative of how the position of the end dividers should be controlled (e.g., control positions or control speeds of rotation, etc.) based upon the direction of travel. Block 304 shows identifying the end divider command and block 306 shows generating control signals based on the direction of travel. In one example, direction of travel processor 228 may determine that agricultural harvester 100, 120 has just made a headland turn. In that case, it may be that the position of the two end dividers 146 and 150 should be reversed so that the position of the right end divider 150 now assumes the position of the left end divider 146 from the previous pass, while the position of the left end divider 146 assumes the position of the right end divider 150 from the previous pass. In another example, the direction of travel processor 228 may determine that agricultural harvester 100, 120 has just made a headland turn, in which case, it may be that the speed of rotation of the end dividers 147 should be reversed so that the speed of rotation of the right end divider 147 now assumes the speed of rotation of the left end divider 147 from the previous pass, while the speed of rotation of the left end divider 147 assumes the speed of rotation of the right end divider 147 from the previous pass. These are merely some examples.

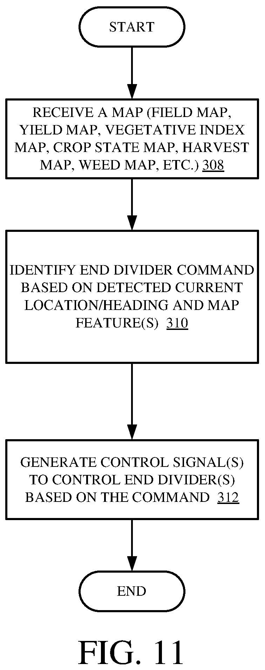

FIG. 11 shows an example in which map input mechanism 180 receives or otherwise inputs one or more maps and generates signal(s) indicative of the characteristic(s) of the map(s). The one or more maps may be one or more of a field map, a yield map, a vegetative index value map, a crop state map, a harvest map (e.g., showing portions of the field that are harvested and unharvested), a weed map, as well as a variety of other maps, etc. Receiving the one or more maps is indicated by block 308 in the flow diagram of FIG. 11. Block 310 shows that map processor 230 may then identify a current position of agricultural harvester 100, 120 from geographic position sensor 173 and also obtain a current heading of agricultural harvester 100, 120 from heading sensor 178. Control action identification system 248 may then identify how to control one or more of the end dividers s based upon the current location of agricultural harvester 100, 120 and the information in the received map. The identified control action is provided to control signal generation system 210 which generates control signals to control actuators to actuate end dividers based on the desired setting. For instance, actuators 158 and 159 may be controlled to drive end dividers 146 and 150 to the desired position. In another example, actuators 161 may controlled to drive end dividers 147 at the desired speed of rotation. Block 312 shows generating control signals to actuate one or more of the end dividers based upon the location and heading of agricultural harvester 100, 120 and the information in the map. For instance, it may be that the end divider that is closely adjacent a fence or tree line needs to be lowered. In another example, it may be that the end divider that is adjacent to a harvested crop row can be raised or increased in rotation speed. These are just some examples of how to control the end dividers based upon the information in a map.

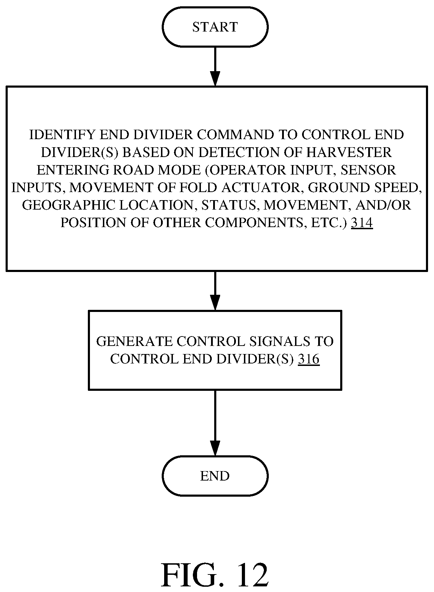

FIG. 12 shows an example in which road mode signal processor 232 detects that agricultural harvester 100, 120 is entering or has entered road mode. Control action identification system 248 then identifies an end divider command to control one or more of the end dividers, such as to lower the end dividers 146 and 150 or to stop rotation of end dividers 147. Detecting that the agricultural harvester is entering or has entered road mode may be based on one or more of an operator input, sensor inputs, movement of the folding actuators 132, 138, the status, movement, or position of the crop processing functionality in the agricultural harvester 100, 120, the ground speed of the agricultural harvester and the geographic location of the agricultural harvester 100, 120, status, movement, or position of other components of agricultural harvester 100, 120, such as grain tank covers 177. Block 314 shows identifying the end divider command to control the end dividers, such as to lower end dividers 146 and 150 or to end rotation of end dividers 147. Block 316 shows that control signal generation system 210 then generates control signals to lower the end dividers based upon the end divider command.

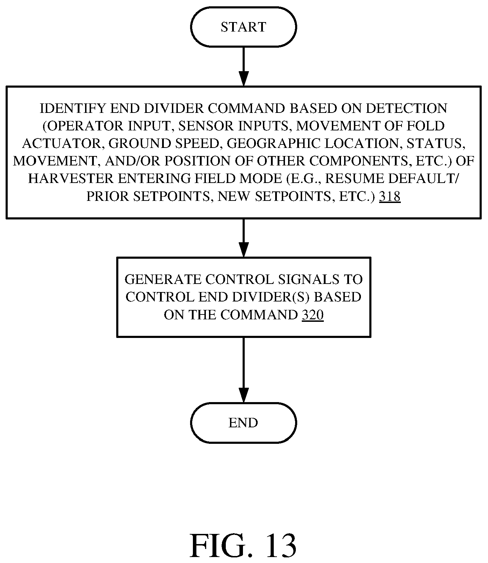

FIG. 13 is an example in which field mode signal processor 234 detects that agricultural harvester 100, 120 is entering or has entered the field mode. Control action identification system 248 then identifies an end divider command to set the end dividers 146 and 150 to a commanded position or to set the speed of rotation of the end dividers 147. Detecting that the agricultural harvester 100, 120 is entering or has entered the field mode may be based on one or more of an operator input, sensor inputs, movement of the folding actuators 132, 138, the status, movement, or position of the crop processing functionality in the agricultural harvester 100, 120, the ground speed of the agricultural harvester and the geographic location of the agricultural harvester 100, 120, status, movement, or position of other components of agricultural harvester 100, 120, such as grain tank covers 177. Block 318 shows that control action identification system 248 identifies the end divider command. Also, at block 320 control signal generation system 210 then generates control signals to actuate (e.g., raise, rotate, etc.) the end dividers (e.g., to resume default or prior set points or actuate them at other settings, such as other positions or other speeds of rotation) based on the end divider command.

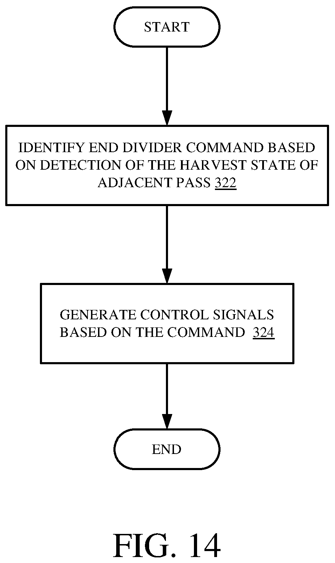

FIG. 14 shows an example in which actuator controller 1600 detects the harvest state (e.g., harvested or unharvested) of the crop adjacent the sides of head 144 and generates an end divider command based on the detected harvest state of the crop. In one example, harvested/unharvested signal processor 236 detects the harvest state (e.g., harvested or unharvested) of the crop adjacent the sides of head 144, based on an output from adjacent pass harvest state sensor 186. Thus, in one example, detecting the harvest state of the crop adjacent the sides of head 144 includes detecting the harvest state of crop adjacent to the sides of head 144 with adjacent pass harvest state sensor 186. In another example, map processor 230 detects the harvest state of the crop of the crop adjacent the sides of head 144, based on a map, such as a harvest map, and generates an end divider command based on the detected harvest state of the crop. Thus, in one example, detecting the harvest state of the crop adjacent the sides of head 144 includes detecting the harvest state based on a map, such as a harvest map. At block 322, control action identification system 248 identifies an end divider command indicating how one or more end dividers should be controlled based upon whether the adjacent crop is harvested or unharvested. At block 324, control signal generator 250 generates control signals to control the end divider(s) (e.g., raise or lower, increase or decrease rotation, etc.) adjacent the harvested crop. For example, if the first adjacent row to the divider that is outside the head is already harvested, the active divider rotation speed may be increased by a control signal generated by control signal generator 250. Or for example, if the first adjacent row to the divider that is outside the head is already harvested, the divider raised. These are merely some examples.

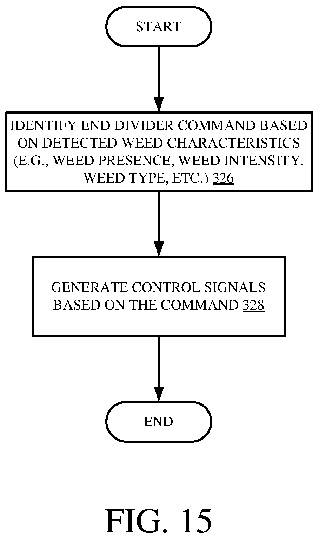

FIG. 15 is a flow diagram indicating an example in which actuator controller 1600 determines characteristics of weeds that are being or about to be encountered by head 144. In one example, weed signal processor 238 determines characteristics (e.g., presence, type, intensity, etc.) of a weed patch that is being or is about to be encountered by head 144, based on an output from weed sensor 188. Thus, in one example, detecting characteristics of weeds includes detecting the characteristics of the weeds with a weed sensor 180. In another example. map processor 230 detects characteristics of a weed patch that is being or is about to be encountered by head 144, based on a map, such as a weed map or vegetative index map, or both. Thus, in one example, detecting characteristics of weeds includes detecting the characteristics of the weeds based on a map, such as a weed map or a vegetative index map, or both. Control action identification system 248 then identifies an end divider command based on the detected weed characteristics. Block 326 shows detecting one or more weed characteristics (e.g., presence, intensity, type, etc.), and block 328 shows that control signal generator 250 generates control signals based upon the one or more detected weed characteristics.

In one example, if the weed intensity exceeds a threshold, the end dividers can be lowered. When the end dividers are lowered, the likelihood of hair pinning weeds is reduced. Similarly, if the weed intensity falls below a threshold, the end dividers can be raised. In one example, the end dividers may be lowered or may be raised depending on the weed type. For instance, some weed types may be more or less likely to result in hair pinning. Similarly, the active end dividers may be slowed (or stopped) or increased in rotational speed depending on the weed type. For instance, some weed types (e.g., viny weeds) may be more likely to wrap, whereas other weed types (e.g., non-viny weeds) may be less likely to wrap.

In one example, if the weed intensity exceeds a threshold, the active end dividers can be slowed down. When the active end dividers are slowed down, wrapping can be prevented, possibly different depending on weed type. Particularly, viny weeds are more prone to wrap and the reduction of speed may need to be more aggressive. Some tall, coarse, stiff weeds such as common ragweed, may cause the active divider speed to be increased to prevent the ragweed from falling outward and pulling corn plants with them.

These are merely some examples.

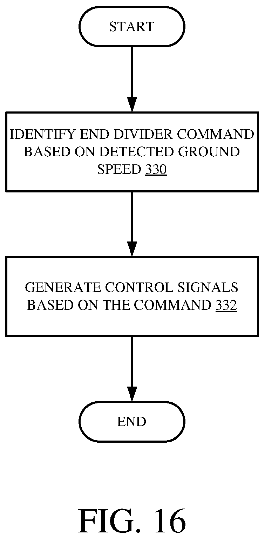

FIG. 16 shows an example in which ground speed signal processor 240 processes ground speed signal received from ground speed sensor 190 to detect the ground speed of agricultural machine 100, 120. At block 330, control action information system 248 identifies an end divider command based on detected ground speed. At block 332, control signal generation system 210 generates control signals based upon the end divider command. For example, the positions of end dividers 146 or 150 may be controlled based on the detected ground speed. In another example, the rotation of end dividers 147 may be controlled based on the detected ground speed.

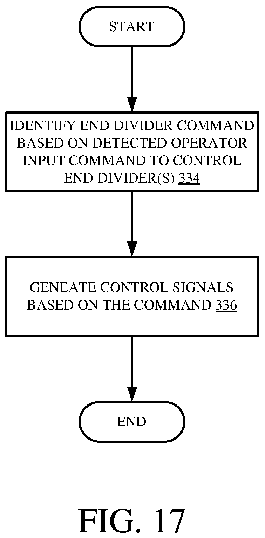

FIG. 17 is a flow diagram illustrating one example in which operator input processor 242 detects an operator input command to control the end dividers (e.g., an operator input command to raise or lower the end dividers, an operator input command to increase or decrease rotation of the end dividers, etc.) received through operator input mechanisms 166. At block 334, control action identification system 248 identifies an end divider command based on the detected operator input command. At block 336, control signal generation system 210 generates control signals to control the end divider actuators (e.g., 158 and 159 or 161) based upon the end divider command.

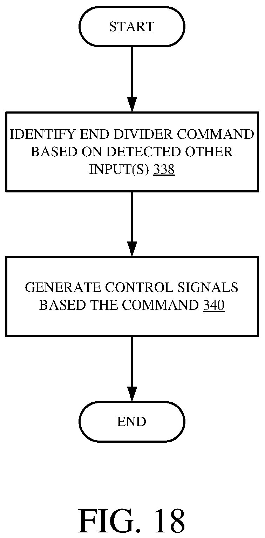

FIG. 18 is a flow diagram illustrating one example in which other input processor 246 detects other variables based on other inputs from other sensors or input mechanisms. At block 338, control action identification system 248 identifies an end divider command based on the other detected variables indicated by the other inputs. At block 340, control signal generation system 210 then generates control signals based upon the other inputs, based on the end divider command.

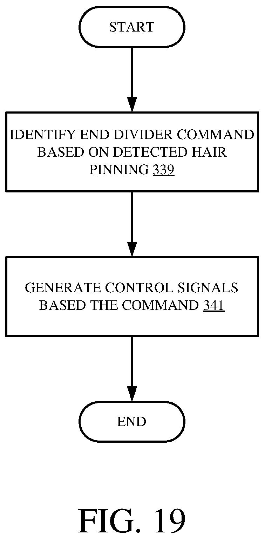

FIG. 19 is a flow diagram indicating an example in which hair pinning signal processor 241 determines that an end divider 146, 150 is experiencing hair pinning, for instance, based on an output from hair pinning sensor 181. Control action identification system 248 then identifies end divider command indicating how to control the end divider 146, 150 based upon the detected hair pinning. Block 339 shows detecting the hair pinning, and block 341 shows that control signal generator 250 generates control signals based upon the hair pinning end divider command. For example, if hair pinning is detected then control signal generator 250 can generate control signals to control the end divider to lower. After the hair pinning is detected as being resolved, then control signal generator 250 can generate control signals to control the end divider to raise.

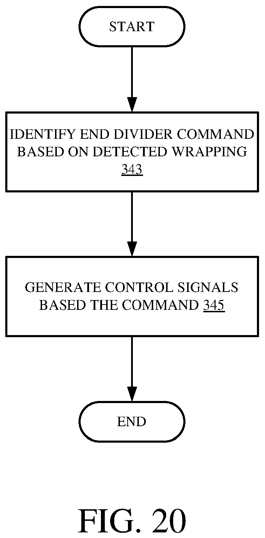

FIG. 20 is a flow diagram indicating an example in which wrapping signal processor 243 determines that wrapping is present on active end dividers, for instance, based on an output from wrapping sensor 183. Control action identification system 248 then generates an end divider command indicating how to control the end dividers 147 based upon the detected wrapping. Block 343 shows detecting the wrapping, and block 328 shows that control signal generator 250 generates control signals based upon the wrapping end divider command. For example, if wrapping is detected then control signal generator 250 can generate control signals to control the end divider to slow down rotation. In some examples, where severe wrapping is detected, control signal generator 250 can generate control signals to control the end divider to temporarily stop or reverse their rotation.

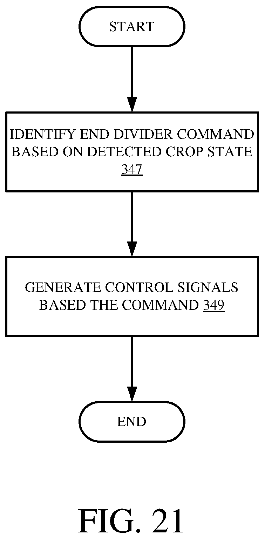

FIG. 21 shows an example in which actuator controller 1600 detects the state (e.g., downed, partially downed, standing, direction of downing, magnitude of downing, amount of downed crop, etc.) of crop proximate (e.g., in front of and/or to the side(s) of) head 144. In one example, crop state signal processor 245 detects the state of the crop proximate head 144 based on an output from crop state sensor 185. Thus, in one example, detecting the state of crop proximate head 144 includes detecting the crop state of crop proximate head 144 with crop state sensor 185. In another example, map processor 230 detects the state of crop proximate head 144 based on a map, such as a crop state map. Thus, in one example, detecting the state of crop proximate head 144 includes detecting the state of crop proximate head 144 based on a map, such as a crop state map. Control action identification system 248 then identifies an end divider command based on the detected crop state. Block 347 shows detecting the crop state, and block 349, control signal generator 250 generates control signals to control the end dividers based on the crop state end divider command. For example, if the crop is downed, control signal generator 250 generates control signals to lower end dividers 146, 150. Or for example, if the crop is downed, control signal generator 250 generates control signals to speed up the rotation of active end dividers 147. Or for example, if the crop is standing, control signal generator 250 generates control signals to raise end dividers 146, 150. Or for example, if the crop is standing, control signal generator 250 generates control signals to speed up or slow down rotation of active end dividers 147 based on whether the crop is taller or shorter, respectively. These are just some examples.

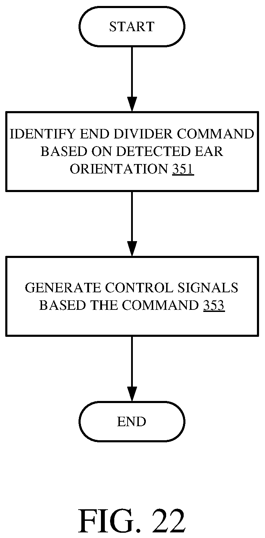

FIG. 22 is a flow diagram indicating an example in which ear orientation signal processor 249 determines the ear orientations proximate head 144, for instance, based on an output from ear orientation sensor 189. Control action identification system 248 then identifies an end divider command indicating how to control the end dividers based upon the detected ear orientation. Block 351 shows detecting the ear orientation, and block 353 shows that control signal generator 250 generates control signals based upon the ear orientation end divider command. For example, if the ear orientation is hanging down, end dividers 146, 150 can be lowered to prevent the ears from being dislodged from the stalk and falling to the ground. Ears hanging down typically mean that the ear shank is weak and is causing it to point downward. Or for example, if the ear orientation is up, end dividers 146, 150 can be raised to catch ricocheting ears as the stalk is pulled down for harvest. Since the ear is pointed upwards it is likely attached well enough that raised end dividers will not knock them off the stalk or may not even contract them. Or for example, if the ear orientation is perpendicular, end dividers 146, 150 can be lowered to prevent the ears from being dislodged from the stalk.

If the ear orientation is hanging down, control signal generator 250 generates control signals to slow down the rotation of active end dividers 147. If the ear orientation is up, control signal generator 250 generates control signals to speed up the rotation of the active end dividers or keep the active end dividers at a normal rotation speed. If the ear orientation is outward or perpendicular to the stalk, control signal generator 250 generates control signals to slow down (or perhaps even stop) the rotation of the active end dividers 147.

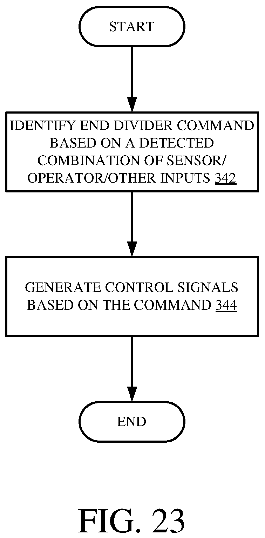

FIG. 23 is a flow diagram illustrating one example in which combination signal processor 246 detects a combination of variables based upon a combination of one or more sensor inputs, operator inputs, or other inputs. At block 342 in the flow diagram of FIG. 23, control action identification system 248 then identifies an end divider command based upon the detected combination of variables. At block 344, control signal generation system 210 then generates control signals based upon the commands obtained through the combination of inputs. In some instances, when machine 100, 120 is not harvesting, active end dividers can be reversed temporarily to clear minor wrapping or build-up.

It can thus be seen that the present description describes a system in which the end dividers 146 and 150 can be controlled through an operator input from an operator compartment 103 of an agricultural harvester 100, 120. The present description also describes a system in which the position of the end dividers 146 and 150 can be automatically controlled based upon a wide variety of different sensed inputs or operator inputs.

The present discussion has mentioned processors and servers. In one example, the processors and servers include computer processors with associated memory and timing circuitry, not separately shown. The processors or servers are functional parts of the systems or devices to which they belong and are activated by, and facilitate the functionality of, the other components or items in those systems.

Also, a number of user interface displays have been discussed. The user interface displays can take a wide variety of different forms and can have a wide variety of different user actuatable input mechanisms disposed thereon. For instance, the user actuatable input mechanisms can be text boxes, check boxes, icons, links, drop-down menus, search boxes, etc. The user actuatable input mechanisms can also be actuated in a wide variety of different ways. For instance, they can be actuated using a point and click device (such as a track ball or mouse). The user actuatable input mechanisms can be actuated using hardware buttons, switches, a joystick or keyboard, thumb switches or thumb pads, etc. The user actuatable input mechanisms can also be actuated using a virtual keyboard or other virtual actuators. In addition, where the screen on which the user actuatable input mechanisms are displayed is a touch sensitive screen, they can be actuated using touch gestures. Also, where the device that displays them has speech recognition components, they can be actuated using speech commands.

A number of data stores have also been discussed. It will be noted the data stores can each be broken into multiple data stores. All can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, components and/or logic. It will be appreciated that such systems, components and/or logic can be comprised of hardware items (such as processors and associated memory, or other processing components, some of which are described below) that perform the functions associated with those systems, components and/or logic. In addition, the systems, components and/or logic can be comprised of software that is loaded into a memory and is subsequently executed by a processor or server, or other computing component, as described below. The systems, components and/or logic can also be comprised of different combinations of hardware, software, firmware, etc., some examples of which are described below. These are only some examples of different structures that can be used to form the systems, components and/or logic described above. Other structures can be used as well.

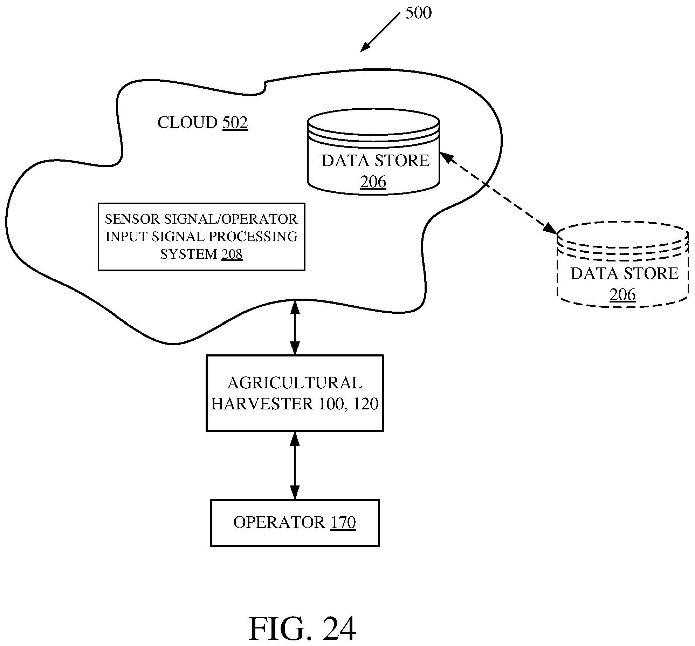

FIG. 24 is a block diagram of harvester 100, 120, shown in FIGS. 1-5, except that it communicates with elements in a remote server architecture 500. In an example, remote server architecture 500 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and they can be accessed through a web browser or any other computing component. Software or components shown in FIGS. 1-5 as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, they can be provided from a conventional server, or they can be installed on client devices directly, or in other ways.

In the example shown in FIG. 24, some items are similar to those shown in FIGS. 1-5 and they are similarly numbered. FIG. 24 specifically shows that sensor signal/operator input signal processing system 208 and data store 206 can be located at a remote server location 502. Therefore, harvester 100, 120 accesses those systems through remote server location 502.

FIG. 24 also depicts another example of a remote server architecture. FIG. 24 shows that some elements of the previous FIGS. are disposed at remote server location 502 while others are not. By way of example, data store 206 can be disposed at a location separate from location 502 and can be accessed through the remote server at location 502. Regardless of where the elements of agricultural system 172 are located, the elements of agricultural system 172 can be accessed directly by harvester 100, 120 through a network (either a wide area network or a local area network), the elements can be hosted at a remote site by a service, or the elements can be provided as a service, or the elements can be accessed by a connection service that resides in a remote location. Also, the data can be stored in substantially any location and intermittently accessed by, or forwarded to, interested parties. For instance, physical carriers can be used instead of, or in addition to, electromagnetic wave carriers. In such an example, where cell coverage is poor or nonexistent, another mobile machine (such as a fuel truck) can have an automated information collection system. As the agricultural harvester 100, 120 comes close to the fuel truck for fueling, the system automatically collects the information from the agricultural harvester 100, 120 using any type of ad-hoc wireless connection. The collected information can then be forwarded to the main network as the fuel truck reaches a location where there is cellular coverage (or other wireless coverage). For instance, the fuel truck may enter a covered location when traveling to fuel other machines or when at a main fuel storage location. All of these architectures are contemplated herein. Further, the information can be stored on the agricultural harvester 100, 120 until the agricultural harvester 100, 120 enters a covered location. The agricultural harvester 100, 120, itself, can then send the information to the main network.

It will also be noted that the elements of the previous FIGS. (e.g., FIGS. 4A-5), or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

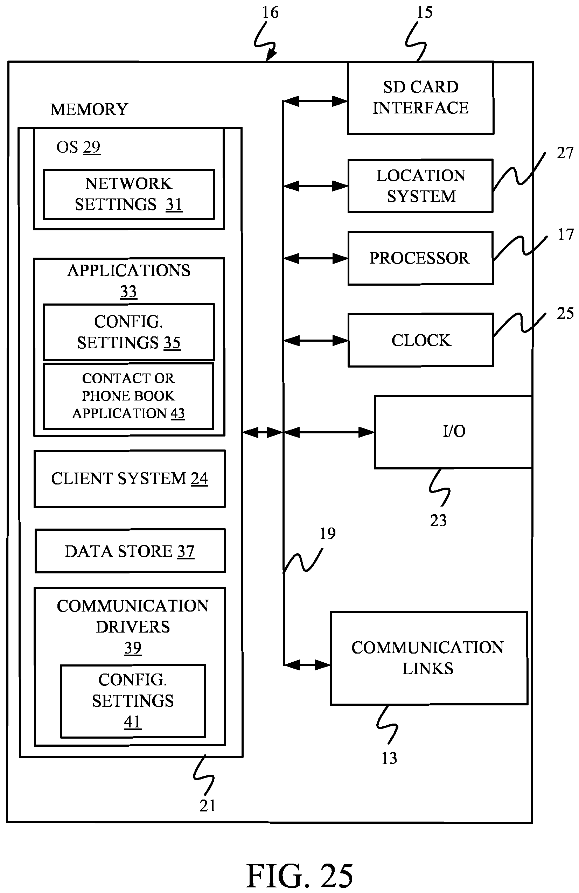

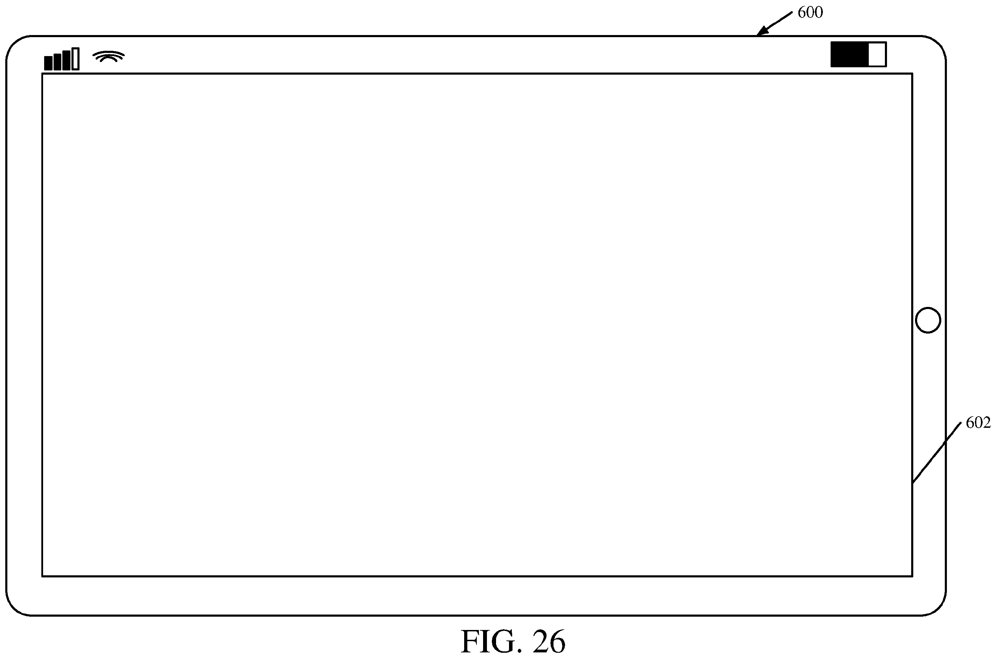

FIG. 25 is a simplified block diagram of one illustrative example of a handheld or mobile computing device that can be used as a user's or client's hand held device 16, in which the present system (or parts of it) can be deployed. For instance, a mobile device can be deployed in the operator compartment 103 of agricultural harvester 100, 120 for use in generating, processing, or displaying the end divider data. FIGS. 26-27 are examples of handheld or mobile devices.

FIG. 25 provides a general block diagram of the components of a client device 16 that can run some components shown in previous FIGS., that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. Memory 21 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 26 shows one example in which device 16 is a tablet computer 600. In FIG. 26, computer 600 is shown with user interface display screen 602. Screen 602 can be a touch screen or a pen-enabled interface that receives inputs from a pen or stylus. Computer 600 can also use an on-screen virtual keyboard. Of course, computer 600 might also be attached to a keyboard or other user input device through a suitable attachment mechanism, such as a wireless link or USB port, for instance. Computer 600 can also illustratively receive voice inputs as well.

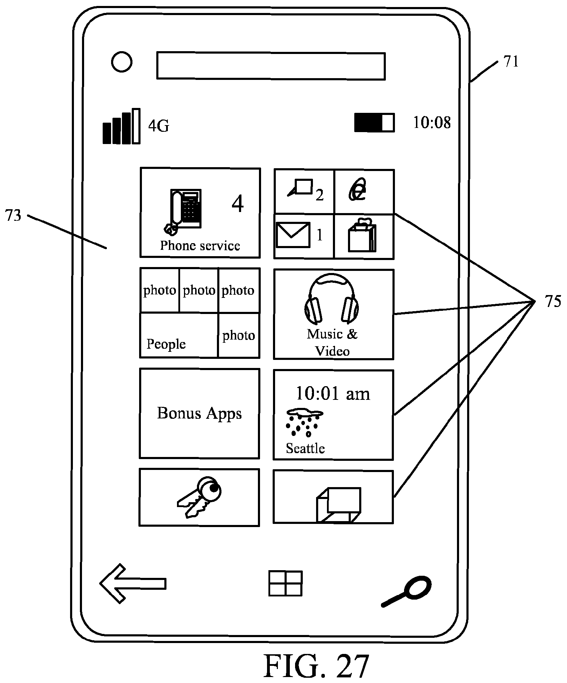

FIG. 27 is similar to FIG. 26 except that the phone is a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

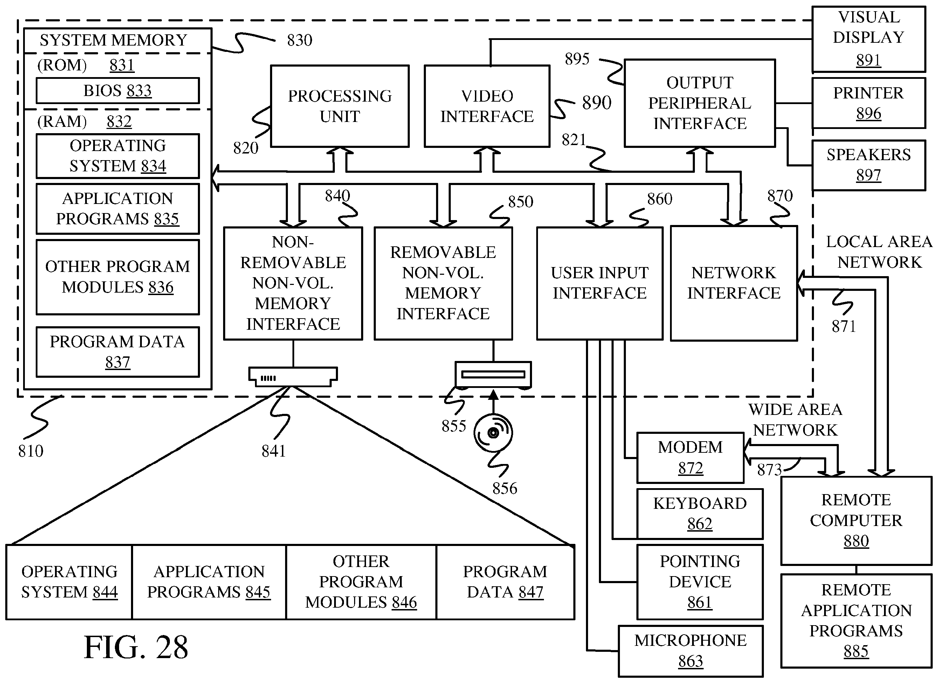

FIG. 28 is one example of a computing environment in which elements of FIGS. 1-5, or parts of it, (for example) can be deployed. With reference to FIG. 28, an example system for implementing some embodiments includes a general-purpose computing device in the form of a computer 810 programmed to operate as described above. Components of computer 810 may include, but are not limited to, a processing unit 820 (which can comprise processors or servers from previous FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to previous FIGS. can be deployed in corresponding portions of FIG. 28.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. It includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 28 illustrates operating system 834, application programs 835, other program modules 836, and program data 837.

The computer 810 may also include other removable/non-removable volatile/nonvolatile computer storage media. By way of example only, FIG. 28 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 28, provide storage of computer readable instructions, data structures, program modules and other data for the computer 810. In FIG. 28, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 28 illustrates, for example, that remote application programs 885 can reside on remote computer 880.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. An agricultural system comprising:
a head (104, 122, 144) configured to be mounted to an agricultural harvester (100, 120);
an end divider (146, 147, 150);
an actuator (158, 159) configured to actuate the end divider (146, 147, 150);
an actuator controller (160, 163, 1600) configured to identify a control action, corresponding to the end divider (146, 147, 150), to take based on an end divider action criterion detected by an input mechanism (162, 164, 166, 168); and
a control signal generation system (210) configured to automatically generate a control signal to control the actuator (160, 163, 1600) to actuate the end divider (146, 147, 150) based on the identified control action;
wherein the input mechanism (162, 164, 166, 168) comprises a sensor (178, 180, 181, 182, 183, 184, 185, 186, 187, 188, 189) configured to detect the end divider action criterion and generate a criterion signal based on the detected end divider action criterion, and wherein the actuator controller (160, 163, 1600) is configured to identify the control action based on the criterion signal;
**characterized in that** the sensor comprises a sensor (183) configured to sense, as the end divider action criterion, vegetation that is wrapped around the end divider (146, 147, 150) and generate, as the criterion signal, a wrapping signal, and that the actuator controller (160, 163, 1600) is configured to identify, as the control action, an end divider rotation speed based on the wrapping signal;
or that the sensor comprises an optical sensor (185) configured to detect, as the end divider action criterion, a crop state characteristic indicative of the presence of downed crop proximate the agricultural harvester and generate, as the criterion signal, a crop state signal indicative of the downed crop state characteristic of crop proximate the agricultural harvester, and that the actuator controller (160, 163, 1600) is configured to identify, as the control action, an end divider (146, 147, 150) position or rotation speed based on the crop state signal;
or that the sensor comprises a material flow sensor (187) configured to detect, as the end divider action criterion, material flow and generate, as the criterion signal, a material flow signal indicative of the material flow, and wherein the actuator controller (160, 163, 1600) is configured to identify, as the control action, an end divider (146, 147, 150) position or rotation speed based on the material flow signal;
or that the sensor comprises a sensor (189) configured to detect, as the end divider action criterion, an orientation of ears of corn proximate the agricultural harvester and generate, as the criterion signal, an ear orientation signal indicative of the orientation of ears proximate the agricultural harvester, and wherein the actuator controller (160, 163, 1600) is configured to identify, as the control action, an end divider (146, 147, 150) position or rotation speed based on ear orientation signal.

2. The agricultural system of claim 1, wherein the sensor comprises a sensor (186) configured to detect, as the end divider (146, 147, 150) action criterion, a harvest state of crop proximate the agricultural harvester and generate, as the criterion signal, a harvest state signal indicative of the harvest state of crop proximate the agricultural harvester, and wherein actuator controller (160, 163, 1600) is configured to identify, as the control action, an end divider (146, 147, 150) position or rotation speed based on the harvest state signal.

3. The agricultural system of claim 1, wherein the sensor comprises a sensor (178) configured to detect, as the end divider (146, 147, 150) action criterion, a direction of travel of the agricultural harvester and generate, as the criterion signal, a heading signal indicative of the direction of travel of the agricultural harvester, and wherein the actuator controller (160, 163, 1600) is configured to identify, as the control action, an end divider (146, 147, 150) position or speed of rotation based on the heading signal.

4. The agricultural system of claim 1, wherein the end divider (146, 147, 150) comprises a plurality of end dividers (146, 147, 150) and wherein the control signal generation system (210) comprises a control action identification system (248) configured to identify, as a part of the control action, an end divider (146, 147, 150), of the plurality of end dividers (146, 147, 150), that corresponds to the control action.

## Patentansprüche

1. Landwirtschaftliches System, umfassend:
einen Kopf (104, 122, 144), der dazu ausgelegt ist, an einer landwirtschaftlichen Erntemaschine (100, 120) montiert zu werden;
einen Endteiler (146, 147, 150);
einen Aktuator (158, 159), der dazu ausgelegt ist, den Endteiler (146, 147, 150) zu betätigen;
eine Aktuatorsteuereinheit (160, 163, 1600), die dazu ausgelegt ist, eine Steueraktion, die dem Endteiler (146, 147, 150) entspricht, zu identifizieren, die basierend auf einem Endteileraktionskriterium, das durch einen Eingabemechanismus (162, 164, 166, 168) detektiert wird, zu ergreifen ist; und
ein Steuersignalerzeugungssystem (210), das dazu ausgelegt ist, automatisch ein Steuersignal zu erzeugen, um den Aktuator (160, 163, 1600) zu steuern, damit er den Endteiler (146, 147, 150) basierend auf der identifizierten Steueraktion betätigt;
wobei der Eingabemechanismus (162, 164, 166, 168) einen Sensor (178, 180, 181, 182, 183, 184, 185, 186, 187, 188, 189) umfasst, der dazu ausgelegt ist, das Endteileraktionskriterium zu detektieren und ein Kriteriumsignal basierend auf dem detektierten Endteileraktionskriterium zu erzeugen, und wobei die Aktuatorsteuereinheit (160, 163, 1600) dazu ausgelegt ist, die Steueraktion basierend auf dem Kriteriumsignal zu identifizieren;
**dadurch gekennzeichnet, dass** der Sensor einen Sensor (183) umfasst, der dazu ausgelegt ist, als das Endteileraktionskriterium Vegetation, die um den Endteiler (146, 147, 150) gewickelt ist, zu erfassen und als das Kriteriumsignal ein Wickelsignal zu erzeugen, und dass die Aktuatorsteuereinheit (160, 163, 1600) dazu ausgelegt ist, als die Steueraktion eine Endteilerdrehzahl basierend auf dem Wickelsignal zu identifizieren;
oder dass der Sensor einen optischen Sensor (185) umfasst, der dazu ausgelegt ist, als das Endteileraktionskriterium eine Erntegutzustandscharakteristik, die das Vorhandensein von abgesenktem Erntegut in der Nähe der landwirtschaftlichen Erntemaschine angibt, zu detektieren und als das Kriteriumsignal ein Erntegutzustandssignal, das die Zustandscharakteristik abgesenkten Ernteguts von Erntegut in der Nähe des landwirtschaftlichen Erntefahrzeugs angibt, zu erzeugen und dass die Aktuatorsteuereinheit (160, 163, 1600) dazu ausgelegt ist, als die Steueraktion eine Position oder Drehzahl des Endteilers (146, 147, 150) basierend auf dem Erntegutzustandssignal zu identifizieren;
oder dass der Sensor einen Materialflusssensor (187) umfasst, der dazu ausgelegt ist, als das Endteileraktionskriterium einen Materialfluss zu detektieren und als das Kriteriumsignal ein Materialflusssignal, das den Materialfluss angibt, zu erzeugen und wobei die Aktuatorsteuereinheit (160, 163, 1600) dazu ausgelegt ist, als die Steueraktion basierend auf dem Materialflusssignal eine Position oder eine Drehzahl des Endteilers (146, 147, 150) zu identifizieren;
oder dass der Sensor einen Sensor (189) umfasst, der dazu ausgelegt ist, als das Endteileraktionskriterium eine Orientierung von Maisähren in der Nähe des landwirtschaftlichen Erntefahrzeugs zu detektieren und als das Kriteriumsignal ein Ährenorientierungssignal, das die Orientierung von Ähren in der Nähe des landwirtschaftlichen Erntefahrzeugs angibt, zu erzeugen, und wobei die Aktuatorsteuereinheit (160, 163, 1600) dazu ausgelegt ist, als die Steueraktion basierend auf einem Ährenorientierungssignal eine Position oder Drehzahl des Endteilers (146, 147, 150) zu identifizieren.

2. Landwirtschaftliches System nach Anspruch 1, wobei der Sensor einen Sensor (186) umfasst, der dazu ausgelegt ist, als das Aktionskriterium des Endteilers (146, 147, 150) einen Erntezustand von Erntegut in der Nähe des landwirtschaftlichen Erntefahrzeugs zu detektieren und als das Kriteriumsignal ein Erntezustandssignal, das den Erntezustand von Erntegut in der Nähe des landwirtschaftlichen Erntefahrzeugs angibt, zu erzeugen, und wobei die Aktuatorsteuereinheit (160, 163, 1600) dazu ausgelegt ist, als die Steueraktion basierend auf dem Erntezustandssignal eine Position oder Drehzahl des Endteilers (146, 147, 150) zu identifizieren.

3. Landwirtschaftliches System nach Anspruch 1, wobei der Sensor einen Sensor (178) umfasst, der dazu ausgelegt ist, als Aktionskriterium des Endteilers (146, 147, 150) eine Fahrtrichtung des landwirtschaftlichen Erntefahrzeugs zu detektieren und als das Kriteriumsignal ein Kurssignal, das die Fahrtrichtung des landwirtschaftlichen Erntefahrzeugs angibt, zu erzeugen, und wobei die Aktuatorsteuereinheit (160, 163, 1600) dazu ausgelegt ist, als die Steueraktion basierend auf dem Kurssignal eine Position oder Drehzahl des Endteilers (146, 147, 150) zu identifizieren.

4. Landwirtschaftliches System nach Anspruch 1, wobei der Endteiler (146, 147, 150) mehrere Endteiler (146, 147, 150) umfasst und wobei das Steuersignalerzeugungssystem (210) ein Steueraktionsidentifikationssystem (248) umfasst, das dazu ausgelegt ist, als Teil der Steueraktion einen Endteiler (146, 147, 150) der mehreren Endteiler (146, 147, 150) zu identifizieren, der der Steueraktion entspricht.

## Revendications

1. Système agricole, comprenant :
une tête (104, 122, 144) configurée pour être montée sur une moissonneuse agricole (100, 120) ;
un diviseur en extrémité (146, 147, 150) ;
un actionneur (158, 159) configuré pour actionner le diviseur en extrémité (146, 147, 150) ;
une unité de commande d'actionneur (160, 163, 1600) configurée pour identifier une action de commande, correspondant au diviseur en extrémité (146, 147, 150), à adopter sur la base d'un critère d'action de diviseur en extrémité détecté par un mécanisme d'entrée (162, 164, 166, 168) ; et
un système de génération de signal de commande (210) configuré pour générer automatiquement un signal de commande pour commander l'actionneur (160, 163, 1600) pour actionner le diviseur en extrémité (146, 147, 150) sur la base de l'action de commande identifiée ;
dans lequel le mécanisme d'entrée (162, 164, 166, 168) comprend un capteur (178, 180, 181, 182, 183, 184, 185, 186, 187, 188, 189) configuré pour détecter le critère d'action de diviseur en extrémité et générer un signal de critère sur la base du critère d'action de diviseur en extrémité détecté, et dans lequel l'unité de commande d'actionneur (160, 163, 1600) est configurée pour identifier l'action de commande sur la base du signal de critère ;
**caractérisé en ce que** le capteur comprend un capteur (183) configuré pour détecter, en tant que critère d'action de diviseur en extrémité, une végétation qui enveloppe le diviseur en extrémité (146, 147, 150) et générer, en tant que signal de critère, un signal d'enveloppement, et que l'unité de commande d'actionneur (160, 163, 1600) est configurée pour identifier, en tant qu'action de commande, une rotation vitesse de diviseur en extrémité sur la base du signal d'enveloppement ;
ou que le capteur comprend un capteur optique (185) configuré pour détecter, en tant que critère d'action de diviseur en extrémité, une caractéristique d'état de culture indicative de la présence de culture tombée à proximité de la moissonneuse agricole et générer, en tant que signal de critère, un signal d'état de culture indicatif de la caractéristique d'état de culture d'une culture à proximité de la moissonneuse agricole, et que l'unité de commande d'actionneur (160, 163, 1600) est configurée pour identifier, en tant qu'action de commande, une position ou vitesse de rotation du diviseur en extrémité (146, 147, 150) sur la base du signal d'état de culture ;
ou que le capteur comprend un capteur de débit de matière (187) configuré pour détecter, en tant que critère d'action de diviseur en extrémité, un débit de matière et générer, en tant que signal de critère, un signal de débit de matière indicatif du débit de matière, et dans lequel l'unité de commande d'actionneur (160, 163, 1600) est configurée pour identifier, en tant qu'action de commande, une position ou vitesse de rotation du diviseur en extrémité (146, 147, 150) sur la base du signal de débit de matière ;
ou que le capteur comprend un capteur (189) configuré pour détecter, en tant que critère d'action de diviseur en extrémité, une orientation d'épis de maïs à proximité de la moissonneuse agricole et générer, en tant que signal de critère, un signal d'orientation d'épi indicatif de l'orientation d'épis à proximité de la moissonneuse agricole, et dans lequel l'unité de commande d'actionneur (160, 163, 1600) est configurée pour identifier, en tant qu'action de commande, une position ou vitesse de rotation du diviseur en extrémité (146, 147, 150) sur la base de signal d'orientation d'épi.

2. Système agricole de la revendication 1, dans lequel le capteur comprend un capteur (186) configuré pour détecter, en tant que critère d'action du diviseur en extrémité (146, 147, 150), un état de récolte d'une culture à proximité de la moissonneuse agricole et générer, en tant que signal de critère, un signal d'état de récolte indicatif de l'état de récolte d'une culture à proximité de la moissonneuse agricole, et dans lequel l'unité de commande d'actionneur (160, 163, 1600) est configurée pour identifier, en tant qu'action de commande, une position ou vitesse de rotation du diviseur en extrémité (146, 147, 150) sur la base du signal d'état de récolte.

3. Système agricole de la revendication 1, dans lequel le capteur comprend un capteur (178) configuré pour détecter, en tant que critère d'action du diviseur en extrémité (146, 147, 150), une direction de déplacement de la moissonneuse agricole et générer, en tant que signal de critère, un signal de cap indicatif de la direction de déplacement de la moissonneuse agricole, et dans lequel l'unité de commande d'actionneur (160, 163, 1600) est configurée pour identifier, en tant qu'action de commande, une position ou vitesse de rotation du diviseur en extrémité (146, 147, 150) sur la base du signal de cap.

4. Système agricole de la revendication 1, dans lequel le diviseur en extrémité (146, 147, 150) comprend une pluralité de diviseurs d'extrémité (146, 147, 150) et dans lequel le système de génération de signal de commande (210) comprend un système d'identification d'action de commande (248) configuré pour identifier, en tant que partie de l'action de commande, un diviseur en extrémité (146, 147, 150), de la pluralité de diviseurs d'extrémité (146, 147, 150), qui correspond à l'action de commande.
